(19) Europäisches Patentamt
European Patent Office
Office européen des brevets

(11) **EP 4 468 589 A1**

(12) **EUROPEAN PATENT APPLICATION**
published in accordance with Art. 153(4) EPC

(43) Date of publication:
27.11.2024 Bulletin 2024/48

(51) International Patent Classification (IPC):
$H02P\ 6/28^{(2016.01)}$     $H02P\ 25/022^{(2016.01)}$

(21) Application number: 22921892.0

(52) Cooperative Patent Classification (CPC):
H02P 6/28; H02P 25/022

(22) Date of filing: 20.01.2022

(86) International application number:
PCT/JP2022/002067

(87) International publication number:
WO 2023/139734 (27.07.2023 Gazette 2023/30)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Hitachi Mitsubishi Hydro Corporation
Tokyo 108-0014 (JP)

(72) Inventors:
• BANDO, Akira
  Tokyo 108-0014 (JP)
• KIKUI, Takahiko
  Tokyo 108-0014 (JP)
• OYAKE, Takashi
  Tokyo 108-0014 (JP)

(74) Representative: Meissner Bolte Partnerschaft
mbB
Patentanwälte Rechtsanwälte
Postfach 86 06 24
81633 München (DE)

(54) **VARIABLE SPEED SYNCHRONOUS GENERATOR-MOTOR DEVICE**

(57) In a variable-speed synchronous generator-motor device, a frequency converter is connected to armature winding of the synchronous machine, an armature current of the synchronous machine are converted into a direct-axis and a quadrature-axis based on a rotational phase reference, and the current is controlled. The variable-speed synchronous machine-motor device includes a phase calculator configured to calculate and output a target voltage phase (th_soln) of the synchronous machine based on a target frequency reference (N_soln system) of the synchronous machine for a quadrature-axis current command value that is output by comparing a command value of active power or a rotational speed with a measurement value. A phase lead compensating is performed for a result of comparing the voltage phase (th_sein) of the synchronous machine and the target voltage phase (th_soln) and the result is added to the quadrature-axis current command value. A rotational speed is regulated by a synchronizing force with respect to a target frequency. The voltage phase fluctuation on the AC system side is biased to the compared result, and the synchronization force is simulated.

FIG.11

**Description**

Field

The present invention relates to a variable-speed synchronous generator-motor device that realizes variable speed operation by connecting a frequency power converter device (hereinafter referred to as a "frequency converter" in the present invention) including semiconductor power circuits connected between a synchronous machine and an AC power system.

Background

The variable speed operation of the synchronous machine by the frequency converter has been applied to a variable speed drive apparatus of electric motor and a hydroelectric power generation facility, a pumping power generation facility, and a wind power generation facility.

In many cases, the purpose of variable speed operation is to improve the overall efficiency including a turbomachinery that is directly connected to a rotating shaft of a synchronous motor-generator. There always exists a trade-off between efficiency improvement and frequency converter cost. Patent Document 1 discloses a method of suppressing frequency converter costs by performing the variable speed operation only at partial load when the efficiency improvement of the turbomachinery is large.

In addition, the frequency of floods and droughts has increased in recent years. In order to make the best use of the existing flood control facilities for flood and drought countermeasures, it is important to improve the efficiency of power generation and secure the amount of discharged water necessary to protect the environment of the river basin while expanding fluctuations in water levels and heads to the maximum allowable value of facilities.

As a measure for flood control and environmental conservation, it is expected that retrofit to variable speed equipment of existing fixed speed power generation facilities will be important.

Since flood and drought countermeasures are urgently required, it is important to minimize the modification of existing equipment and start variable speed operation in the shortest period of construction in addition to the short-term installation of additional equipment.

On the other hand, water turbines and generators, which are the main equipment of power generation facilities, and frequency converters to be added are often manufactured and delivered by different companies.

For this reason, there are many cases where it takes longer time not only to determine the specifications of the frequency converter, but also to modify and adjust specifications, especially related to controlling, between the existing water turbine suppliers and generator equipment suppliers.

Citation List

Patent Literatures

Patent Literature 1: WO 2019/235595 A1
Patent Literature 2: JP 5537095

Non Patent Literature

Non Patent Literature 1: Virtual Synchronous Generator Control of Inverters for Inertia in Responding to Inertia Deficiency in Power Systems, Journal of the Institute of Electrical Engineers of Japan, Vol. 141, No. 11, p. 698 (November 2021)

Summary

Technical Problem

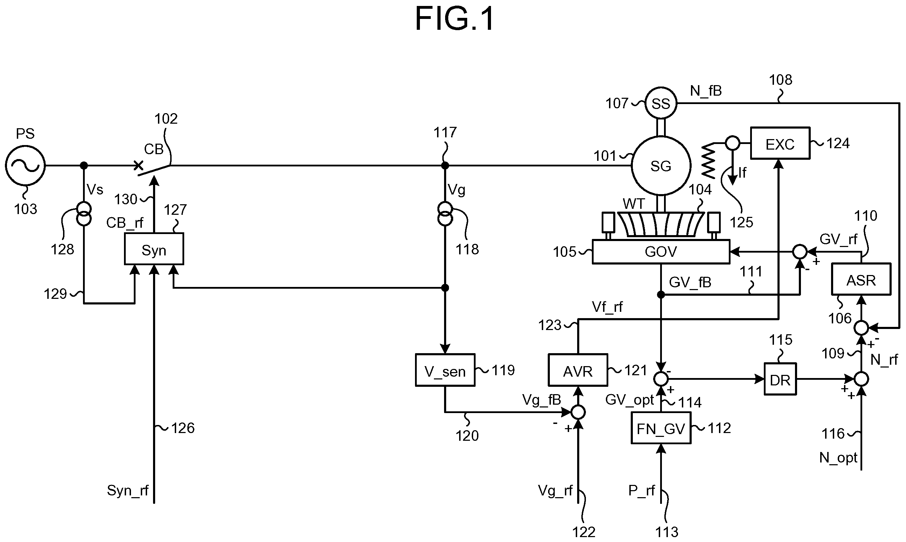

FIG. 1 shows a configuration example of a hydroelectric power generation facility as an example of a conventional fixed speed power generation facility. A synchronous machine (SG) 101 is connected to an AC power system (PS) 103 via a synchronous circuit breaker (CB) 102. A rotating shaft of the synchronous machine (SG) 101 is directly connected to a water turbine (WT) 104.

The water turbine (WT) 104 increases and decreases a flow to turbine rotor blades by using a governor (GOV) 105 that opens and closes guide vanes distributed in a peripheral portion, and controls an output of the water turbine (WT) 104 to the required value. A speed regulator (ASR) 106 compares a speed signal (N_fB) 108 from a rotational speed detector (SS) 107 with a speed command (N_rf) 109, and outputs a guide vane opening command (GV_rf) 110. Further, the speed regulator (ASR) 106 compares the guide vane opening command (GV_rf) 110 with the guide vane opening signal (GV_fB) 111 and outputs a guide vane opening operation command to the governor (GOV) 105.

A water turbine characteristic function generator (FN_GV) 112 outputs a guide vane optimum opening (GV_opt) 114 based on an output command (P_rf) 113. A guide vane opening signal (GV_fB) 111 from the governor (GOV) 105 and the guide vane optimum opening (GV_opt) 114 are compared and the result is input to an arbitration rate (DR) 115, and the output is biased to an optimum speed command (N_opt) 116 to obtain a speed command (N_rf) 109.

In the case of a conventional power generation facility, an optimum speed command (N_opt) 116 is fixed at a synchronous speed of the synchronous machine (SG) 101 corresponding to a reference frequency of an AC power system (PS) 103, and the synchronous machine and the water turbine have been operated at a fixed rotational speed.

A generator voltage (Vg) 117 of the synchronous machine (SG) 101 inputs an output of the instrument transformer 118 to a voltage sensor (V_sen) 119 and the voltage sensor (V_sen) 119 outputs a generator voltage signal (Vg_fB) 120. An automatic voltage regulator (AVR) 121 compares the generator voltage signal (Vg_fB) 120 and a generator voltage command (Vg_rf) 122, and outputs a field excitation voltage command (Vf_rf) 123 to a field excitation device (EXC) 124.

The field excitation device (EXC) 124 is classified into a thyristor exciter, a brushless exciter, or the like, but the generator voltage (Vg) 117 is commonly adjusted by increasing or decreasing a field excitation winding current (If) 125 of the synchronous machine (SG) 101 in accordance with the field excitation voltage command (Vf_rf) 123.

In the above configuration of the conventional hydroelectric power generation facility, the procedures for starting the water turbine (WT) 104, boosting up the voltage of the synchronous machine (SG) 101, closing the synchronous circuit breaker (CB) 102, and starting power generation to the AC power system (PS) 103 will be described.

In a standstill state, an inlet valve installed upstream of the guide vane is opened to start the water turbine (WT) 104. The water turbine (WT) 104 is accelerated according to a command from a speed regulator (ASR) 106 up to an optimum speed command (N_opt) 116. During the acceleration, the field excitation device (EXC) 124 is activated, and the automatic voltage regulator (AVR) 121 raises a generator voltage (Vg) 117 up to the generator voltage command (Vg_rf) 122.

When the speed signal (N_fB) 108 approaches the optimal speed command (N_opt) 116, the synchronous input command (Syn_rf) 126 is input to the synchronous tester (Syn) 127. When amplitudes and phase errors of a system voltage (Vs) 129 of the AC system (PS) 103 from the instrument transformer 128 and a generator voltage (Vg) 117 from the instrument transformer 118 are within a predetermined range, the synchronous tester (Syn) 127 outputs the synchronous input command (CB_rf) 130 to the synchronization circuit breaker (CB) 102, and the synchronous machine (SG) 101 is synchronously connected to the AC system (PS) 103.

Next, the guide vane opening signal (GV_fB) 111 increases with the increase in the output command (P_rf) 113, and the output of the hydropower turbine (WT) 104 is adjusted to the output command (P_rf) 113.

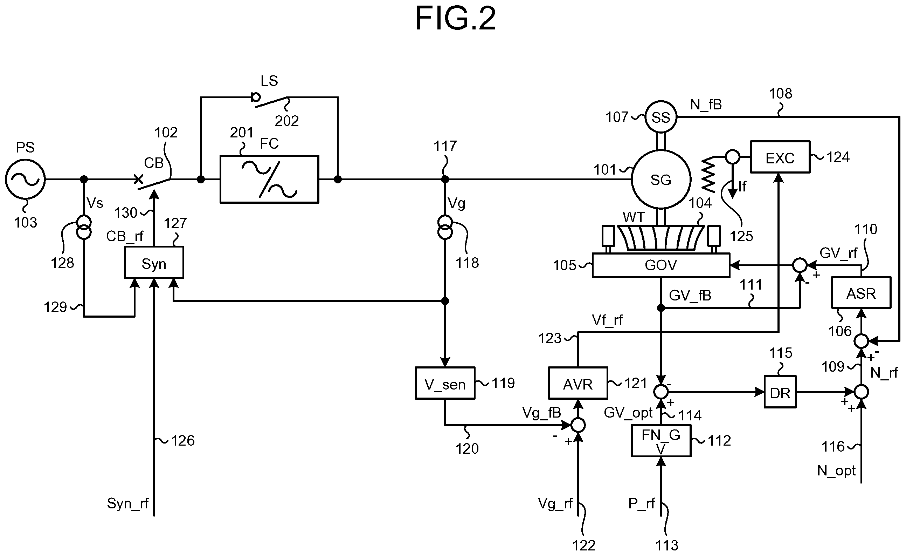

Fig. 2 shows an ideal configuration for maximizing functions of the existing power generation facilities as well as for achieving variable speed operation with minimal modifications. The same numbers as in the previous Fig. 1 indicate the same components and the description thereof is omitted to avoid duplication.

Ideally, the frequency converter (FC) 201 is connected between the AC system (PS) 103 and the synchronous machine (SG) 101 to realize variable speed operation without modifying the existing parts. In addition, in order to make the most of the existing functions, it is ideal to bypass both ends of the frequency converter (FC) 201 with a circuit breaker or a load switch (LS) 202 and use both the variable speed operation and conventional fixed speed operation.

There are five problems to be solved in realizing the configuration of Fig. 2.

A first problem is to ensure the torsional spring characteristics of the synchronous machine (SG) 101. When connected to the AC system (PS) 103, the synchronous machine (SG) 101 passively transmits the torque of the water turbine (WT) 104 to the transformed torque of the AC system as will be explained, so that torque control of the synchronous machine is both unnecessary and impossible. When the synchronous machine (SG) 101 is connected to the frequency converter (FC) 201, regulating the synchronous machine's torque is itself an object of conventional frequency converter control. For this reason, a co-ordinated control of the frequency converter control of the synchronous machine's torque and the prime mover torque of the water turbine (WT) 104 is essential, thus requiring additions and modifications of such the existing speed regulator (ASR) 106.

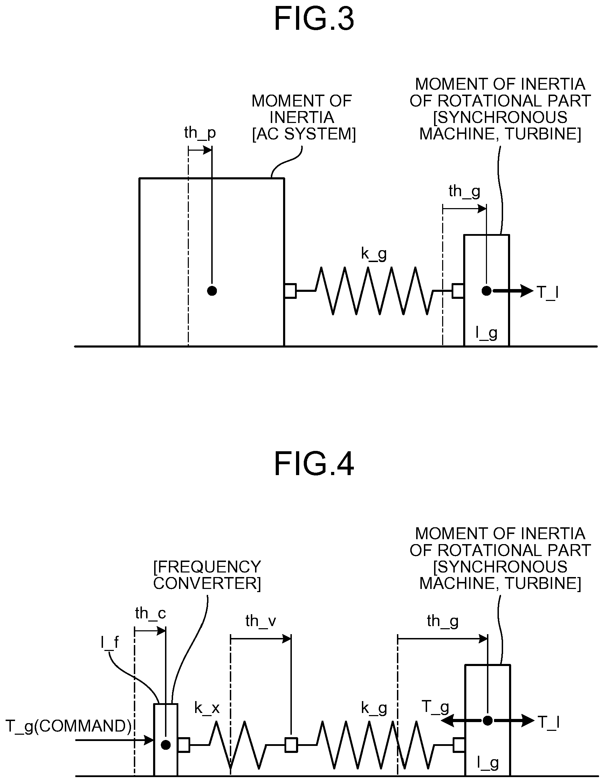

Hereinafter, the first problem will be described from an operating principle with reference to Figs. 3 and 4.

FIG. 3 shows an operating principle of the synchronous machine (SG) 101 connected to the AC system (PS) 103. Here, an operation of an electrical system is transformed to a mechanical rotating system.

Hereinafter, a transformation from the electrical system to the mechanical rotating system will be described.

The power unit of the mechanical rotating system of the prime mover (water turbine) and the synchronous machine is "torque x rotation speed", and the power unit of the electrical system of the AC system and the synchronous machine is "voltage x current". When characteristics of the synchronous machine are regarded as an energy converter, there are relations of "voltage = proportionality coefficient x rotation speed" and "torque = proportionality coefficient x current". The former is derived from "Faraday's Law" and the latter from "Fleming's Law". The proportionality coefficient is derived from a magnetic flux density of the synchronous machine and is adjusted by a field excitation current (If) of the synchronous machine. As a result, when the AC system is transformed to the mechanical rotating system, the frequency is converted into speed and the voltage phase is converted into the rotational phase.

The moment of inertia of the AC system transformed to the mechanical rotating system can be approximated by a sum of the moments of inertia of synchronous machines connected to the AC system. This inertia value of the AC system is much larger than the moment of inertia (I_g) which is equal to a sum of synchronous machine inertia and the turbine inertia. Thus, this inertia value of the AC system is considered to be infinite. In this case, the mechanical rotating system of the synchronous machine can be regarded as an inertia frame that rotates at the AC system frequency. Further, the AC system seen from the synchronous machine is a phase input source (th_p).

When the operation on the inertial frame is ensured, the synchronous machine has a torsional spring characteristic of the mechanical rotating system that transmits the prime mover torque (T_l) to the AC system. The torsional phase corresponds to (th_g-th_p) in Fig. 3. In the case of the torsional spring constant (k_g), the phase (th_g) of the synchronous machine can be expressed by Mathematical formula (1). This is an oscillation equation of a one-mass system.

[Mathematical formula 1]

$$I\_g \times \frac{d}{dt^2}(th\_g) = -k\_g \times (th\_g - th\_p) + T\_l \quad \cdots (1)$$

More precisely, a relationship between the output (P_g) of the synchronous machine and the torsional phase can be expressed by Mathematical formula (2). Here, for simplicity, the armature winding resistance is ignored.

[Mathematical formula 2]

$$P\_g = \frac{E\_f \times V}{Xd} \times \sin(th\_g - th\_v) + \frac{V^2}{2}\left(\frac{1}{Xq} - \frac{1}{Xd}\right) \times \sin[2 \times (th\_g - th\_v)]$$

$$\cdots (2)$$

In Mathematical formula (2), (E_f) indicates an internal induced voltage of the synchronous machine, (V) indicates an armature voltage, (Xd) indicates a direct-axis reactance, and (Xq) indicates a quadrature-axis reactance.

The prerequisite for Mathematical formula (2) is that "the torsional phase (th_g-th_v) is within ±90 [degrees]". If this range is exceeded, it becomes a step-out state and the operation by synchronizing power cannot be continued. Furthermore, when the voltage phase (th_v) of the synchronous machine begins to deviate from the inertial frame, the synchronous machine's operation cannot be continued.

Fig. 4 is a diagram illustrating an operating principle of the synchronous machine (SG) 101 connected to the frequency converter (FC) 201. As in Fig. 3 above, the electrical system is converted to a mechanical rotating system.

In general, frequency converters can be broadly classified into voltage source converters (VSC) with capacitors and load commutated converters (LCC). In recent years, voltage source converters (VSCs) empowered by self-arc-extinguishing semiconductor power devices have become mainstream. Although the name is a voltage source converter (VSC), characteristics seen from the rotating motion system of the synchronous machine (SG) 101 are current sources. The reason why the frequency converter (FC) 201 has current source characteristics will be described as below.

The energy stored in the capacitor of voltage source converter (VSC) is equivalent to the energy form rated output of the frequency converter (FC) 201 times the duration from 10 ms to 100 ms, which coincides with the time constant. This time constant (I_f) is two to three orders of magnitude shorter than the time constant (I_g) derived from the moment of inertia of the mechanical rotational speed system. Therefore, the time constant (I_f) of the frequency converter can be ignored when considering the operation of the mechanical rotational speed system.

A thermal capacity of semiconductor chips or wafers that make up power semiconductor devices is on the order of several milliseconds. Since the power (loss) generated by a semiconductor is eventually determined by the current, a current control that can precisely adjust the current value is required. As a result, the frequency converter (FC) 201 has current source characteristics having a time constant of several milliseconds to several tens of milliseconds.

As described above, the current control of the frequency converter (FC) 201 adjusts the output voltage of the frequency converter (FC) 201 by coordinate-converting the armature currents (Is_a, Is_b, Is_c) of the synchronous machine (SG) 101 into the direct-axis current (Id) and the quadrature-axis current (Iq) at the rotational phase (th_g), and matching the direct-axis and quadrature-axis current command values. The aforementioned "torque=proportional coefficient x current" is more precisely "torque=proportional coefficient x quadrature-axis current".

Conventionally, the direct-axis current command (Id_rf) is output for a current control by matching the power factor or voltage of the synchronous machine with a target value, and the quadrature-axis current command (Iq_rf) is output for a current control by matching the active power or rotational speed with the target value.

The quadrature-axis current is proportional to the torque. Since it is difficult to measure the torque, an active power derived from the torque or the rotational speed is adjusted with the target value.

Generally, a reactor element is required between the frequency converter (FC) 201 and the synchronous machine. In this case, a twist phase occurs between the voltage phase of the synchronous machine (th_v) and the voltage phase of the frequency converter (th_c). Converting the reactor function into a mechanical rotating system results in a torsion spring having a spring coefficient (k_1).

As mentioned above, the inertial time constant (I_f) of the frequency converter (FC) can be ignored, so the equation of motion for the phase (th_g) of the synchronous machine connected to the frequency converter is given by Mathematical formula (3).

[Mathematical formula 3]

$$(l\_g) \times \frac{d}{dt^2}(th\_g) = -T\_g + T\_l \qquad \cdots (3)$$

The characteristics of the synchronous machine (SG) 101 do not change whether it is connected to the AC system (PS) 103 or the frequency converter (FC) 201. However, since a spring corresponding to the reactor is connected in series, a relationship between the torque command value (T_g) and the phase (th_c) of the frequency converter (FC) is given by Mathematical formula (4).

[Mathematical formula 4]

$$T\_g = \frac{k\_g \times k\_x}{k\_g + k\_x} \times (th\_g - th\_c) \qquad \cdots (4)$$

The frequency converter (FC) 201 is controlled in accordance with Mathematical formula (4). The torque command value (T_g) is a control input, and the voltage phase (th_c) is a control output.

Also, even if the voltage phase (th_v) of the synchronous machine deviates from the reference phase of the inertial system, the restoring force due to the spring action does not work. As a result, it operates while slipping out of the inertial frame like an induction machine.

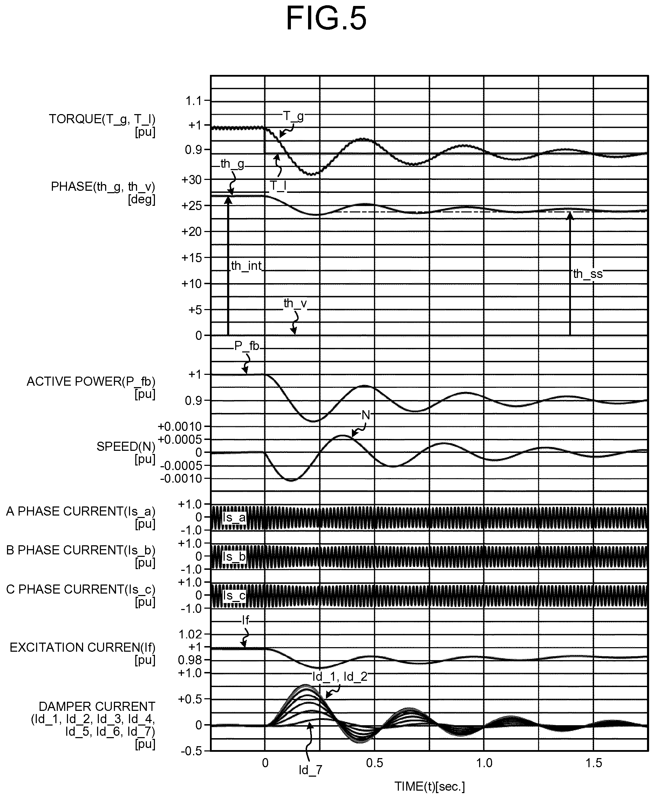

Next, the first problems mentioned above will be explained using the waveforms shown in Figs. 5, 6, and 7.

In the following, the synchronous machine constant (Xd = 0.9 [pu], Xq = 0.6 [pu]), a unitized moment of inertia time constant (I_g = 3.4 [seconds]), rated power output (1.0 [pu]) and rated power factor (0.9 [pu] lag) will be used as numerical examples throughout this application.

There are two inputs (disturbances) during synchronous speed operation: a prime mover torque (T_l) and an AC system voltage phase (th_p).

Fig. 5 shows a transient response when the prime mover torque changes stepwise from (T_l = 1.0 [pu]) to (T_l = 0.9 [pu]).

The synchronous machine torque (T_g) and the prime mover torque (T_l) are united by a rated torque, and the direction of power generation is defined as positive. The rotational phase (th_g) and the voltage phase (th_v) of the synchronous machine are expressed in an electrical angle [degrees], and the direction of power generation rotation is defined as positive. The phase (th_v) is a voltage phase of the synchronous machine, but the relationship with the phase (th_p) of the AC system (PS) 103 can be regarded as a relation of (th_v=th_p) when the moment of inertia of the AC system and the transmission line capacity are large. The rotational speed (N) unitizes a variation from the inertial system speed (AC system frequency).

Armature currents of the synchronous machine are denoted by (Is_a, Is_b, Is_c) and the exciting current is denoted (If). A case of seven damper bars per pole is shown, and current values (Id_1, Id_2, ... , Id_7) are unitized. Here, seven damper bar currents is denoted by (Id_1, Id_2, ... , Id_7) in order from a beginning to an end in a direction of a rotational direction of during power generation.

Before the step change at time t=0, the prime mover torque and the synchronous machine torque are balanced at (T_l=T_g=1.0 [pu]). The twist phase difference at this time is (th_int=26.8 [degrees]). After the step change, the synchronous machine torque (T_g) converges to the prime mover torque (T_l=0.9[pu]) with damped oscillation.

The voltage phase (th_v=0 [degrees]) hardly changes before and after the step change. While the rotational phase (th_g) is damped and oscillating, the torsional phase difference decreases by (2.7 [degrees]) to (th_ss=24.1 [degrees]) and converges. This value corresponds to 0.1[pu] of (th_int=26.8[degrees]). From the above, it can be seen that the synchronous machine torque (T_g) follows the prime mover torque (T_l) owing to a torsion spring action.

The active power (P_fb) converges while damping and oscillating in the same way as the torque. The rotation speed (N) converges to the value (N=0) before the step.

As for the damper bar current value, the amplitude of the bar at the beginning of the rotation direction (Id_1) is the largest, and the amplitude of the bar at the end (Id_7) is the smallest. Attenuation of the damper current amplitude substantially matches the amplitude attenuation waveforms of torque, rotation speed, and rotation phase.

Before and after the step, the synchronous machine voltage phase (th_v) does not change since it is synchronized with the inertial system. On the other hand, the rotation phase (th_g) changes. As described above, the synchronous speed operation on the inertial system is ensured by the torsion spring characteristics of the synchronous machine.

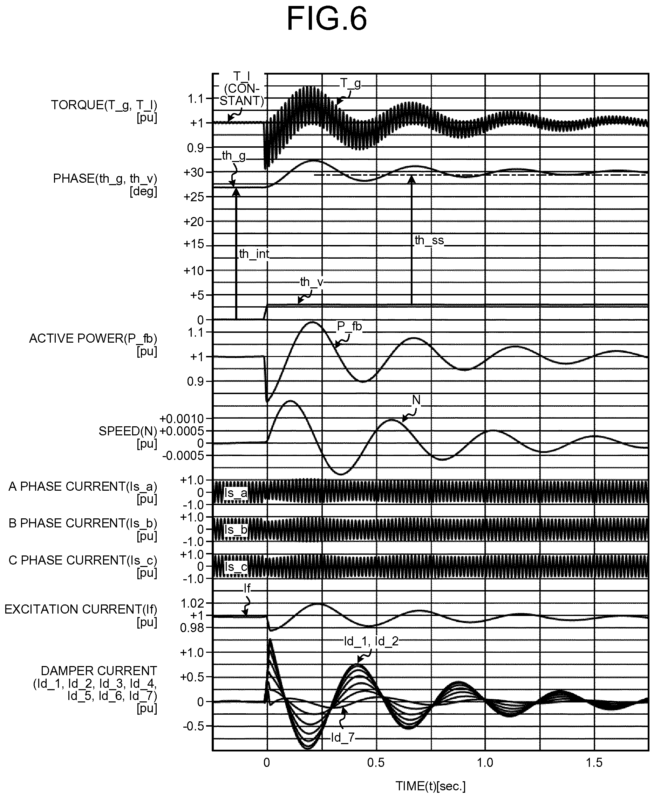

Fig. 6 shows a transient response when the voltage phase (th_p) of the AC system advances stepwise (2.5 [degrees]). Operating conditions before the step change are the same as those in Fig. 5, and the description thereof is omitted to avoid duplication.

Almost simultaneously with the voltage step change at time t=0, the synchronous machine voltage phase advances from (th_v=0 [degrees]) to (th_v=2.5 [degrees]). The rotational phase (th_g) cannot be changed suddenly due to the effect of the moment of inertia (I_g). Therefore, the torsional phase (th_int) decreases stepwise by (2.5 [degrees]), and the synchronous machine torque rapidly decreases from (T_g=1 [pu]) to (T_g=0.81 [pu]).

A step change in the synchronous machine voltage phase (th_v) generates a transient DC component in the armature currents (Is_a, Is_b, Is_c), and the rotation frequency pulsation component is added to the synchronous machine torque (T_g).

Immediately after the step change, the synchronous machine torque (T_g) and speed (N) undergo damped oscillation, and both of them converge to the values before the step. Also, a torsional phase difference of the synchronous machine converges to the value before the step change (th_ss=th_int=26.8 [degrees]) as in the previous Fig. 5. On the other hand, the rotation phase (th_g) advances by 2.5 [degrees] together with the voltage phase (th_v) and converges.

As described above, even if the voltage phase (th_p) of the AC system is changed in step, the voltage phase (th_v) and rotational phase (th_g) of the synchronous machine maintain synchronization with the voltage phase (th_p) of the AC system, which is a reference of the inertial system. Synchronous speed operation on the inertial system is ensured by the torsional spring characteristics of the synchronous machine.

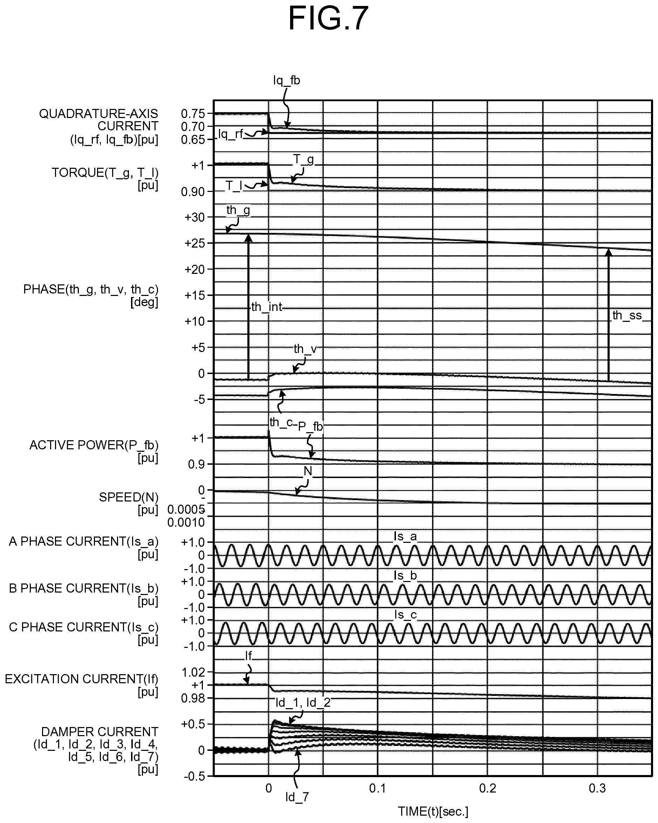

Similar to the previous Fig. 5, Fig. 7 shows a transient response when the prime mover torque changes in a step from (T_l=1.0[pu]) to (T_l=0.9[pu]). However, the synchronous machine (SG) 101 is connected to the frequency converter (FC) 201. Operating conditions before the step change are same as those in Fig. 5, and the description thereof is omitted to avoid duplication.

In Fig. 7, it is assumed that the steady-state quadrature-axis current values before and after the step change of the prime mover torque (T_l) have been measured in advance. Simultaneously with the step change in the prime mover torque (T_l) at time t=0, the quadrature-axis current command (Iq_rf) is step changed to a set value corresponding to the pre-measured value.

In Fig. 7, a proportional and integral control is adopted for both the direct-axis and the quadrature-axis as a current control system. Owing to the proportional gain, the quadrature-axis current value (Iq_fb) follows from the step change of the quadrature-axis current command (Iq_rf) to about 60% of the step width of the quadrature-axis current command (Iq_rf). Then, owing to the integral gain, the quadrature-axis current value (Iq_fb) follows the command value in about 0.1 [s].

The synchronous machine torque (T_g) follows the step change of the prime mover torque (T_l) with a waveform that is almost similar to the quadrature axis current value (Iq_fb).

The active power (P_fb) converges to a constant value approximately 0.15 [seconds] after the step change.

A value obtained by dividing an area by the inertia time constant (I_g) is equal to the speed (N) change, the area being surrounded by the time waveforms of the synchronous machine torque (T_g) and prime mover torque (T_l). In Fig. 7, the speed is decelerated by (N=-0.0005 [pu]) and changed to a constant speed. Since the restoring force by the torsion spring effect does not work, the speed remains deviated from the inertial system.

The torsion phase (th_int) of the synchronous machine before the step response is the same as in the previous Fig. 5, but due to the addition of the torsion at the reactor, the phase (th_c) of the frequency converter is delayed by about 3 [degrees] from the phase (th_v) of the synchronous machine.

Immediately after the step response, the frequency converter works in a direction to bring the torsional phase of the synchronous machine to the convergence value (th_ss) after the step. As a result, the phase (th_c) of the frequency converter changes in the forward direction.

After that, since the torsional phase is held at the convergence value (th_ss) after the step while the speed (N) is deviated from the inertial frame system in the deceleration direction, the deviation of the phase (th_c) of the frequency converter together with the deviation of the rotation phase (th_g) increases with time in the delay direction, as shown in the example of Fig 7.

As described above, as shown in Fig. 7, when connected to a conventional frequency converter, the restoring force of the synchronous machine by the torsion spring characteristics becomes invisible owing to the control with the frequency converter control. Since the phase (th_c) of the frequency converter itself, which should be a reference of the inertial frame system, is shifted, synchronous speed operation on the inertial frame by the torsional spring characteristics cannot be maintained.

A second problem is how to secure of damped vibration. The vibration damping effect of the synchronous machine (SG) 101 relies on the damper bar current. However, when connected to the frequency converter (FC) 201, the vibration damping effect of the damper bar current is lost and an alternative function is required.

In order to explain the vibration damping effect during synchronous speed operation, a hypothetical situation is considered for comparison that the end rings that fasten both ends of the damper bar are removed and that no damper bar current flows.

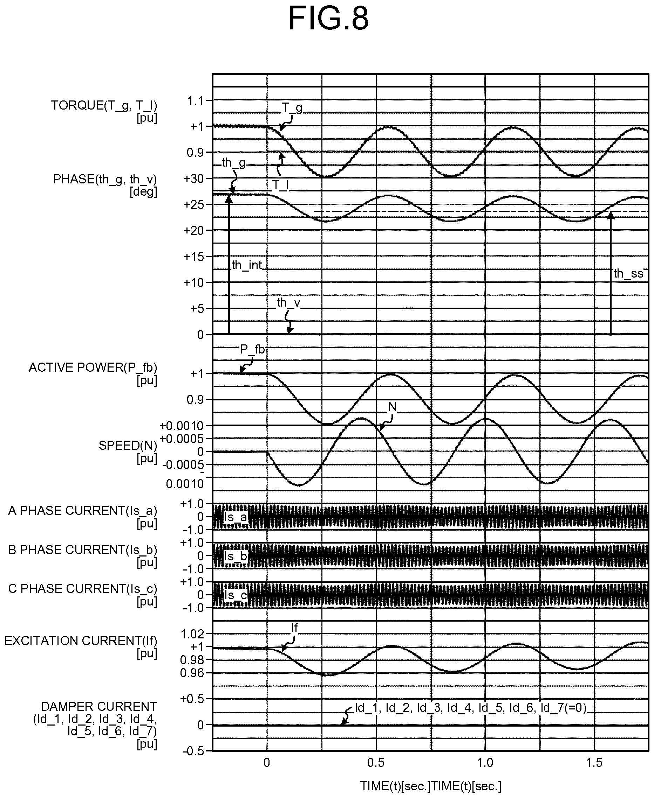

Fig. 8 shows the transient response when the prime mover torque changes stepwise from (T_l=1.0[pu]) to (T_l=0.9[pu]). The same symbols in Figs. 1 to 7 have the same contents, and the operating conditions before the step change are also the same as those in Fig. 5 and the description thereof is omitted to avoid duplication.

The synchronous machine torque (T_g) after the step change makes a simple harmonic oscillation around a central value of the prime mover torque (T_l=0.9 [pu]), with the value before the step change (T_g=1.0 [pu]) as the upper limit, and no attenuation is observed during the period shown.

As in the previous Fig. 5, the voltage phase (th_v = 0 [degrees]) hardly changes before and after the step change. The rotational phase of the synchronous machine (th_g) starts a simple harmonic oscillation and almost no damping is observed.

Almost no attenuation of active power (P_fb) and velocity (N) is observed. From the above, it can be seen that the vibration damping effect of the torsion spring action of the synchronous machine torque (T_g) depends on the damper bar current.

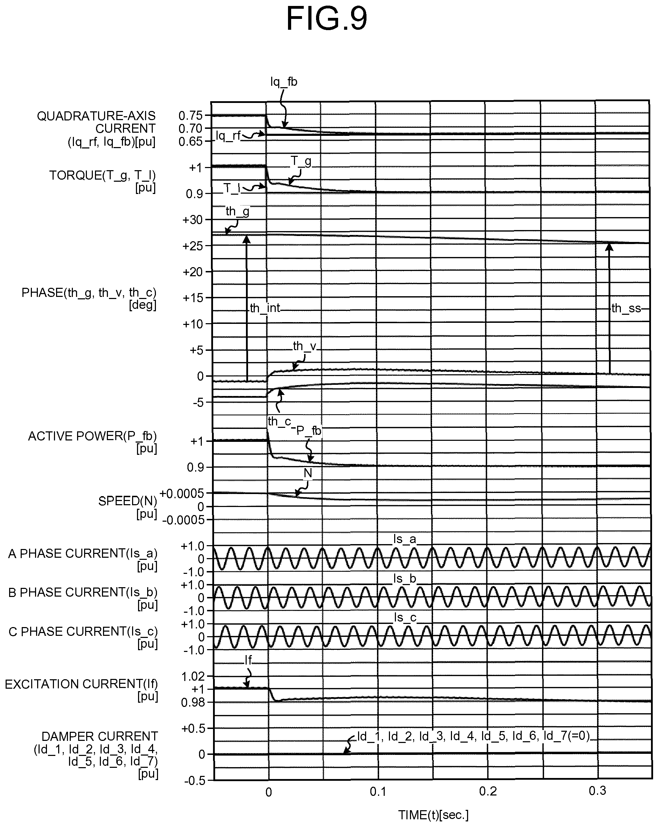

Fig. 9 shows the transient response when the synchronous machine (SG) 101 is connected to the frequency converter (FC) 201 and no damper bar current flows, and the prime mover torque changes stepwise from (T_l=1.0 [pu]) to (T_l=0.9 [pu]) in the same manner as in Fig. 7. The same symbols as in Figs. 1 to 8 have the same contents, and the operating conditions before the step change are the same as in Fig. 7 and the description thereof is omitted to avoid duplication.

The step change of the quadrature-axis current command (Iq_rf) is the same as in Fig. 7. The quadrature-axis current value (Iq_fb) response is almost the same as the previous Fig. 7, and the influence of the damper bar current is minor. For the synchronous machine torque (T_g) response, the damper bar current works in the direction of maintaining the magnetic flux, which is an obstacle to control. When the damper bar current disappears, the impediment factor disappears, so control responsiveness is improved as compared with the case shown in Fig. 7.

When the damper bar current disappears, the synchronous machine torque (T_g) response is improved, so the speed deceleration is decreased from (N = -0.0005 [pu]) to (N = -0.0002 [pu]) compared to the previous Fig. 7.

However, as in the previous Fig. 7, the restoring force due to the torsion spring effect does not work, and it remains deviated from the inertial frame system.

From the above, it can be seen that when the synchronous machine (SG) 101 is connected to the frequency converter (FC) 201, regardless of the presence or absence of a damper bar, it is necessary to secure the vibration damping function of the mechanical rotating system by using alternative means.

A third problem is how to prevent the synchronous machine (SG) 101 from overheating. In the case of conventional frequency converter control, when the synchronous machine (SG) 101 is connected to the frequency converter (FC) 201, the vibration damping effect due to the damper bar current is lost. On the other hand, whenever the frequency converter current command changes, the damper bar current will flow even under operating conditions that did not occur during the synchronous speed operation. It is necessary to prevent the accompanying temperature overheating of the damper bar itself and the deterioration and melting of the peripheral iron core.

Principally, the damper bar is a necessary part for the torsional spring effect during synchronous machine operation. The spring effect works only with external factors, and it is assumed that current flows only during transient phenomena associated with this. Structural design and thermal design are based on this premise. Current flow during frequency converter control operation, which is an internal factor, is unexpected at synchronous machine design. It is necessary to take countermeasures against this point.

Comparing the damper bar current waveforms (Id_1, Id_2, ... , Id_7) in Fig. 7 with the previous damper bar current waveforms in Fig. 5, a root mean square value of damper bar current is increased. When connected to the frequency converter (FC) 201, the damper bar current does not contribute to vibration damping, and the damper bar current flows not only due to external factors such as prime mover torque (T_l) changes, but also due to internal factors such as changing the current command value under frequency converter control.

A fourth problem is to prevent loss of synchronizing power when securing the torsion spring effect while connecting the synchronous machine (SG) 101 to the frequency converter (FC) 201. When securing the torsion spring effect in the frequency converter (FC) 201, the torsion spring effect is actively used, so the risk of stepping out increases compared to when the AC system is connected and the torsion spring effect is generated passively.

A fifth problem is to secure the torsion spring effect when the phase of the AC system suddenly changes. If the frequency converter (FC) 201 is intervened, the torsion spring effect of the synchronous machine (SG) 101 can not be achieved when the phase of the AC system suddenly changes, and can not contribute to system stabilization as in the conventional system.

The purpose of the present invention is to provide a variable-speed synchronous generator-motor apparatus that can maintain the torsion spring effect and vibration suppression effect of a synchronous machine by adopting a frequency converter that solves the above issues, thereby maximizing the use of existing equipment that assumes synchronous speed operation, improving overall efficiency through variable-speed operation, preventing step-out, which is a side effect inherent to the torsion spring effect, improving reliability, and exhibiting the torsion spring effect even when the phase of the system changes rapidly.

Solution to Problem

In order to achieve the above-mentioned purpose, the target phase signal (th_soln) of the generator voltage or the generator side voltage of the frequency converter is generated, the sine function output (sin_dlt) of the phase difference between the target phase signal (th_soln) and the phase measurement signal (th_sein) of the generator voltage or the generator side voltage of the frequency converter is calculated, and the sine function output (sin_dlt) is biased to a quadrature-axis current command. A rotational speed can be fixed at the frequency converter frequency while ensuring the torsion spring effect.

In order to achieve the above-mentioned purpose, the vibration due to the torsion spring effect of the synchronous machine can be damped by quadrature-axis current command that is added by phase lead compensating circuit output or by the time differentiation circuit output either of which inputs the sine function output (sin_dlt).

In order to achieve the above-mentioned purpose, the damper bar overcurrent of the synchronous machine can be suppressed by suppressing the time change rate of the frequency command of the target phase signal (th_soln) of the generator side voltage.

In order to achieve the above-mentioned purpose, the step-out can be prevented by stopping the biasing of the quadrature-axis current command by the above-mentioned sine function output (sin_dlt) when the quadrature-axis current command exceeds a predetermined range.

In order to achieve the above-mentioned purpose, the torsion spring effect can be exhibited by biasing the change in the AC system voltage phase to the generator voltage or the target phase signal (th_soln) of the generator side voltage of the frequency converter.

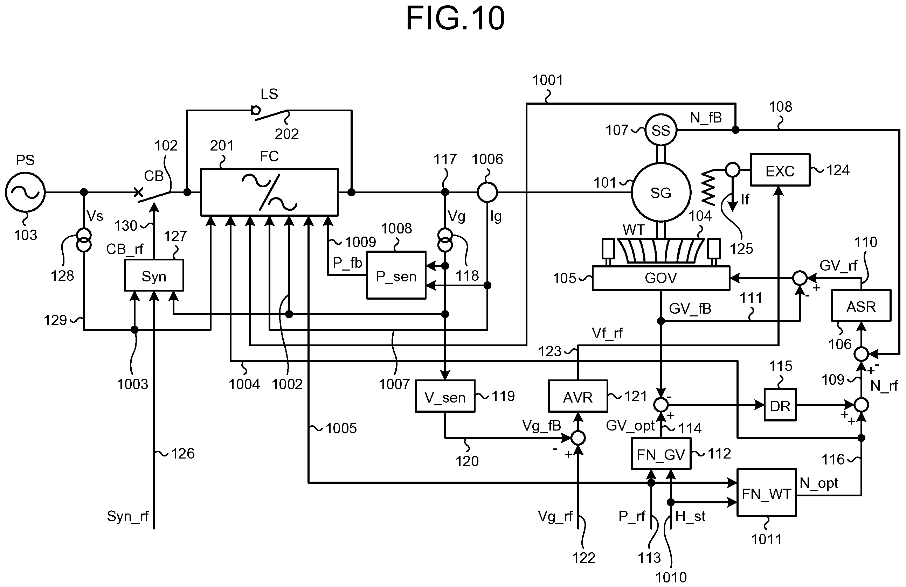

Fig. 10 shows an example of the device configuration for achieving the above objectives. The same numbers as those in Figs. 1 and 2 above have the same contents, and description thereof is omitted to avoid duplication.

A speed signal (N_fB) 108 on a measurement line 1001, a generator voltage (Vg) 117 on a measurement line 1002, an AC system voltage (Vs) 129 on a measurement line 1003, an optimum speed command (N_opt) 116 on a command line 1004, and an output command (P_rf) 113 on a command line 1005 are branched to and input to a frequency converter (FC) 201.

From the generator current (Ig) 1007 from the instrument current transformer 1006 and the generator voltage (Vg) 117, the power sensor (P_sen) 1008 measures and calculates the active power (P_fb) 1009. The active power (P_fb) 1009 is compared with the output command (P_rf) 113, and regulated.

In Fig. 10, a static head signal (H_st) 1010 is input to a water turbine characteristic function generator (FN_GV) 112, and a guide vane optimum opening (GV_opt) 114 that achieves the highest efficiency of the water turbine is output in accordance with the static head.

Also, a second water turbine characteristic function generator (FN_WT) 1011 is provided, and an optimum speed command (N_opt) 116 is input to the speed regulator (ASR) 106 and the frequency converter (FC) 201 in accordance with the output command (P_rf) 113 and the static head signal (H_st) 1010.

In order to achieve the object of the present invention, the measuring instrument, the function generator and the signal line are added as explained above. However, the additional parts shown in Figs. 2 and 10 can be regarded as a secondary system with respect to the existing part of Fig. 1 as a primary system.

In other words, the existing portion serves as the primary system and inputs a command output or a branch output to the added portion, but there is no command output from the added portion to the existing portion. With the primary/secondary system configuration described above, the intended purpose can be achieved while minimizing the modification and adjustment of the existing parts.

Advantageous Effects of Invention

According to the variable speed synchronous machine of the present invention, it is possible to realize a variable speed operation while taking advantage of the synchronizing power effect or torsion spring effect of the conventional synchronous machine. Because the existing equipment can be used as it is, it is possible to reduce the cost of remodeling equipment and the opportunity loss during the period of outage associated with remodeling, and improve the operational efficiency after remodeling.

Brief Description of Drawings

Fig. 1 is a diagram showing a configuration example of a conventional power generation facility using a synchronous machine.

Fig. 2 is a diagram showing a configuration example of a primary variable speed system in which a frequency converter is connected to conventional power generation facility.

Fig. 3 is a diagram showing the principle of operation of a synchronous machine connected to an AC system.

Fig. 4 is a diagram showing the operating principle of a synchronous machine connected to a conventional frequency converter.

Fig. 5 is a diagram showing operation waveforms of a synchronous machine connected to an AC system when the load torque changes stepwise.

Fig. 6 is a diagram showing operation waveforms of a synchronous machine connected to an AC system when the voltage phase of the AC system changes stepwise.

Fig. 7 is a diagram showing operation waveforms of a synchronous machine connected to a conventional frequency converter when the load torque changes stepwise

Fig. 8 is a diagram showing operation waveforms of a synchronous machine connected to an AC system in a state of no current flowing through the damper bars when the load torque changes stepwise

Fig. 9 is a diagram showing operation waveforms of a synchronous machine connected to a conventional frequency converter in a state of no current flowing through the damper bars when the load torque changes stepwise.

Fig. 10 is a diagram showing a configuration example of a power generation equipment using a variable speed synchronous machine of the present invention.

Fig. 11 is a diagram showing the configuration of an example according to claim 1 of the present invention.

Fig. 12 is a diagram showing operation waveforms in an example according to claim 1 of the present invention.

Fig. 13 is a diagram showing the configuration of an example according to claim 2 of the present invention when the load torque changes stepwise.

Fig. 14 is a diagram showing operation waveforms of the example according to claim 2 of the present invention when a speed command changes stepwise.

Fig. 15 is a diagram showing a configuration of claim 3 of the present invention.

Fig. 16 is a diagram showing operation mode switching according to claim 3 of the present invention.

Fig. 17 is a diagram showing operation waveforms of claim 3 of the present invention when switching between the synchronous machine mode and the variable speed mode when the load torque changes suddenly.

Fig. 18 is a diagram showing a configuration of claim 4 of the present invention.

Fig. 19 is a diagram showing operation waveforms of claim 4 of the present invention when a voltage phase of the AC system changes stepwise.

Fig. 20 is a diagram showing the configuration of an embodiment in which claims 2, 3, and 4 of the present invention are combined.

Description of Embodiments

Embodiments of a variable-speed synchronous generator-motor apparatus according to the present invention will be described in detail below with reference to the drawings. In addition, the present invention is not limited by these embodiments.

[EMBODIMENTS]

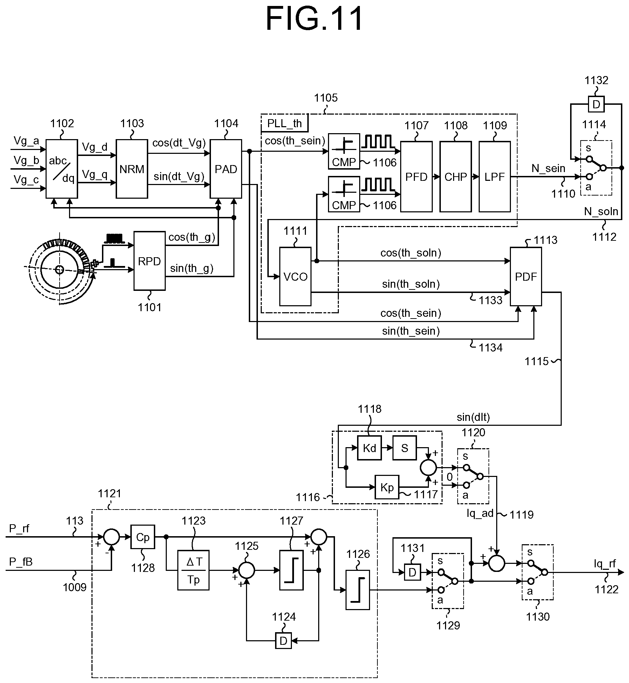

A configuration of the embodiment of claim 1 of the present invention will be described using Fig. 11.

A rotational phase detector (RPD) 1101 outputs a two-phase rotational phase (th_g) of the synchronous machine (SG) 101 by a rotational speed detector or a resolver device. The generator voltage signals (Vg_a, Vg_b, Vg_c) and the rotational phase (th_g) from the instrument transformer 118 are input and converted into dq axis generator voltage signals (Vg_d, Vg_q) by the coordinate converter (abc/dq) 1102. The coordinate converter (abc/dq) 1102 performs the calculation of Mathematical formula (5).

(Mathematical formula 5)

$$\begin{bmatrix} Vg\_d \\ Vg\_q \end{bmatrix} = \frac{2}{3} \begin{bmatrix} +\cos(\text{th\_g}) + \cos\left(\text{th\_g} - \frac{2}{3}\pi\right) + \cos\left(\text{th\_g} + \frac{2}{3}\pi\right) \\ -\sin(\text{th\_g}) - \sin\left(\text{th\_g} - \frac{2}{3}\pi\right) - \sin\left(\text{th\_g} + \frac{2}{3}\pi\right) \end{bmatrix} \begin{bmatrix} Vg\_a \\ Vg\_b \\ Vg\_c \end{bmatrix}$$

$$\cdots (5)$$

The dq-axis generator voltage signals (Vg_d, Vg_q) are input to a phase calculator (NRM) 1103 to calculate a two-phase voltage phase (dt_Vg) whose amplitude is normalized. The phase calculator (NRM) 1103 performs the calculation of Mathematical formula (6).

(Mathematical formula 6)

$$\begin{bmatrix} \cos(\text{dt\_Vg}) \\ \sin(\text{dt\_Vg}) \end{bmatrix} = \frac{1}{\sqrt{(Vg\_d)^2 + (Vg\_q)^2}} \begin{bmatrix} Vg\_d \\ Vg\_q \end{bmatrix} \quad \cdots (6)$$

The phase calculator (NRM) 1103 includes a low pass filter function. The dq-axis generator voltage signals (Vg_d, Vg_q) are output after removing harmonic components and the like due to switching of power semiconductor devices that constitute the frequency converter.

The two-phase voltage phase (dt_Vg) and the rotation phase (th_g) are input to a phase adder (PAD) 1104 to calculate a two-phase voltage phase signal (th_sein) rotating at the generator voltage frequency. The phase adder (PAD) 1104 performs the operation of Mathematical formula (7).

(Mathematical formula 7)

$$\begin{bmatrix} \cos(\text{th\_sein}) \\ \sin(\text{th\_sein}) \end{bmatrix} = \begin{bmatrix} \cos\{(\text{dt\_Vg}) + (\text{th\_g})\} \\ \sin\{(\text{dt\_Vg}) + (\text{th\_g})\} \end{bmatrix} \quad \cdots (7)$$

According to the above embodiment, by calculating via the two-phase rotation phase (th_g), there is an effect of accurately outputting the phase even when the frequency deviates from the AC system frequency while removing higher frequency components.

A cosine signal of the two-phase voltage phase signal (th_sein) is input to the phase-locked loop (PLL_th) 1105.

The function of the phase-locked loop (PLL_th) 1105 can be realized by a software applying the discrete Fourier transform (DFT) with an operation cycle of 10 to 40 microseconds on microcomputers available on the market at the time of filing in order for fulfilling the application of the present invention. Patent document 2 discloses a software for high-speed and high-precision detection of an amplitude, a phase, and a frequency of a variable frequency signal by applying the discrete Fourier transform (DFT). Here, in order to clarify the functions in a concise manner, the description will be made by dividing them into virtually known circuit functional elements.

An input signal is passed through a comparator (CMP) 1106, a phase frequency detector (PFD) 1107, a charge pump (CHP) 1108, and a low pass filter (LPF) 1109 to output a voltage detection frequency (N_sein) 1110.

A voltage control oscillator (VCO) 1111 inputs a voltage target frequency (N_soln) 1112 and outputs a two-phase voltage target phase signal (th_soln) 1133.

The phase subtractor (PDF) 1113 outputs the voltage phase signal (th_sein) 1134 and the phase shift (dlt) 1115 of the voltage target phase signal (th_soln). A phase subtractor (PDF) 1113 performs an operation of Mathematical formula (8).

(Mathematical formula 8)

$$\begin{bmatrix} \cos(\text{dlt}) \\ \sin(\text{dlt}) \end{bmatrix} = \begin{bmatrix} \cos\{(\text{th\_sein}) - (\text{th\_soln})\} \\ \sin\{(\text{th\_sein}) - (\text{th\_soln})\} \end{bmatrix} \quad \cdots (8)$$

In the variable speed mode, the switch 1114 selectively outputs the voltage target frequency (N_soln) 1112 from the a-side terminal.

Hereinafter, in the embodiments of the present application, the switch selectively outputs the a-side in the case of an operation mode (variable speed mode) that does not use the torsion spring effect, and the s-side in the case of an operation mode that uses the torsion spring effect (synchronous machine mode).

In variable speed mode, the voltage detection frequency (N_sein) 1110 is selectively output. In the case of the synchronous machine mode, the previous value holder 1132 holds and outputs the voltage detection frequency (N_sein) 1110 value immediately before switching to the synchronous machine mode.

The phase subtractor (PDF) 1113 performs a calculation of Mathematical formula (9).

(Mathematical formula 9)

$$(dlt) = (th\_sein) - (th\_soln) \qquad \cdots (9)$$

A phase subtractor (PDF) 1113 outputs the sine signal of a phase shift (dlt) 1115 which is input to a phase lead compensator 1116. The phase lead compensator 1116 includes a proportional gain (Kp) 1117 and a differential gain (Kd) 1118 in the configuration of this embodiment.

The output of phase lead compensator 1116 is input to the synchronous machine mode side (s) of the switch 1120 as a quadrature-axis current command correction (Iq_ad) 1119. A switch 1120 selectively outputs a 0-level signal in the variable speed mode.

The active power regulator 1121 matches and inputs the output command (P_rf) 113 branched and input through the command line 1005 in Fig. 10 and the active power (P_fb) 1009. The output of the active power regulator 1121 corresponds to the quadrature-axis current command (Iq_rf) 1122 in the variable speed mode.

The active power regulator 1121 of this embodiment is a proportional-integral controller including a proportional gain (Cp) 1128 and a digital integrator. The digital integrator includes a proportional gain ($\Delta$T/Tp) 1123 determined by the calculation period ($\Delta$T) and the integration time constant (Tp), a previous value holder (D) 1124 and an adder 1125.

In this embodiment, the limiter 1126 suppresses the quadrature-axis overcurrent, and the limiter 1127 speed up the start of the integration operation when recovering from the quadrature-axis overcurrent.

In the variable speed mode, the a-side of each of the switch 1129 and the switch 1130 is selected, and the output of the limiter 1126 of the active power regulator 1121 is output as the quadrature-axis current command (Iq_rf) 1122.

In the case of the synchronous machine mode, the s-side of each of the switch 1129 and the switch 1130 is selected. The output of the previous value holder 1131 is held in the output of the limiter 1126 immediately before switching to the synchronous machine mode.

The output of the phase lead compensator 1116 is output via the s-side of the switch 1120 as the quadrature-axis current command correction (Iq_ad) 1119. The output of switch 1129, which is held by value holder 1131, is biased to the quadrature-axis current command correction (Iq_ad) 1119 which is output as the quadrature-axis current command (Iq_rf) 1122 via the s-side of the switch 1130.

Operations when the above configuration is applied to the water power plant shown in Fig. 10 will be described.

Procedures from starting the water turbine (WT) 104 to generating power in the AC system (PS) 103 via the frequency converter (FC) 201 will be described. Former Figs. 1, 2, and 10 have the same contents, and the description thereof is omitted to avoid duplication.

The synchronous circuit breaker (CB) 102 is closed and the frequency converter (FC) 201 is connected to the AC system (PS) 103. The load switch (LS) 202 is opened. If the capacitor of the frequency converter (FC) 201 has already been discharged, the capacitor is charged by the initial charging circuit to prepare the frequency converter (FC) 201 to be energized.

The output command (P_rf) 113 is held at a minimum value near zero and the inlet valve installed upstream of the guide vanes is opened to start the rotation of the water turbine (WT) 104. The speed regulator (ASR) 106 accelerates to an optimum speed command (N_opt) 116 corresponding to the minimum output command near zero. During the acceleration, the exciter (EXC) 124 is activated, and the generator voltage (Vg) 117 is raised up to the generator voltage command (Vg_rf) 122 by the automatic voltage regulator (AVR) 121. Here, setting the generator voltage command (Vg_rf) 122 to a value proportional to the optimum speed command (N_opt) 116 has an effect of preventing overloading of the generator and the exciter.

After the generator voltage (Vg) 117 rises, the frequency converter (FC) 201 is started up in the variable speed mode.

Since the output command (P_rf) 113 is held at a minimum value near zero, the quadrature-axis current command (Iq_rf) 1122 from the active power regulator 1121 also becomes a minimum value near zero.

Since the transient phenomenon at the startup of the frequency converter (FC) 201 converges quick enough within 100 milliseconds, the variable speed mode is switched to the synchronous machine mode by a timer scheduled operation without waiting for a response signal from the frequency converter (FC) 201.

Next, the output command (P_rf) 113 is increased, the guide vane opening signal (GV_fB) 111 is increased, and the output of the water turbine (WT) 104 is settled at the output command (P_rf) 113.

During the procedure explained above, the rotational speed of the synchronous machine (SG) 101 is held at the optimum speed command (N_opt) 116 by the torsion spring characteristics. Therefore, the first and second problems can be resolved and the initial objective can be achieved without modifying or adjusting the water turbine (WT) 104 such as the speed regulator (ASR) 106.

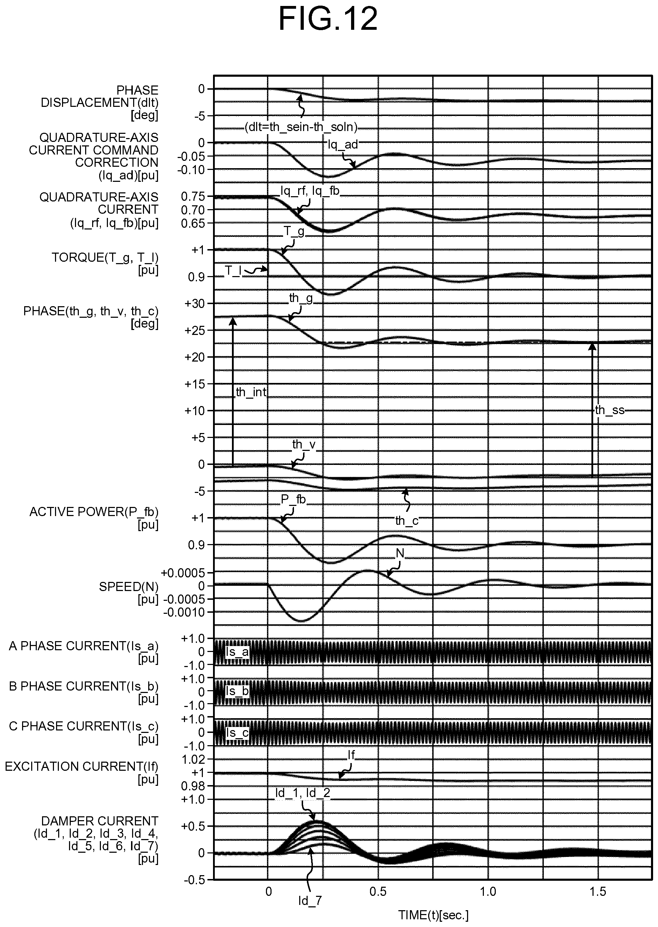

The operation of Fig. 11 will be described below using the waveforms shown in Fig. 12. For comparison with previous Figs. 5 and 9, Fig. 12 shows a transient response when the prime mover or turbine torque changes stepwise from (T_l=1.0 [pu]) to (T_l=0.9 [pu]) under the same step conditions as shown in Figs. 5 and 9. The same numbers as those in Figs. 5 and 9 above have the same contents, and the description thereof is omitted to avoid duplication.

At time t=0, the phase displacement (dlt) begins to change in the negative direction at the same time as the prime mover or turbine torque (T_l) changes stepwise. This is because the rotational phase (th_g) begins to lag due to the rapid decrease in the prime mover torque (T_l) which is the acceleration torque.

As the phase shift (dlt) 1115 changes, the quadrature-axis current command correction (Iq_ad) 1119 also starts to change from 0 in the negative direction. Since the output of the active power regulator 1121 is held in the synchronous machine mode, the quadrature-axis current command (Iq_rf) 1122 also starts to change in the negative direction. As a result, the generator torque (T_g), which is the brake torque, also decreases and becomes smaller than the prime mover torque (T_l), and the rotational speed shifts to acceleration.

The oscillation of the speed (N) is attenuated by the phase lead compensator 1116 and converges to the value before the step change.

Comparing with Fig. 5, the convergence values of velocity (N) and active power (P_fb) are the same, and the torsion spring effect, which is an initial objective, appears effectively.

On the other hand, the rotational phase (th_g) converges so as to deviate from the inertial system as shown in Fig. 9. However, the convergence value is about 5 degrees later than before the step change, which is larger than the 2.3 degrees in Fig. 5.

This difference is because the generator voltage phase (th_v) is fixed to the AC system in Fig. 5, whereas the voltage phase (th_c) of the frequency converter (FC) 201 lags about 2.5 degrees in Fig. 9. This difference value is equal to the convergence value of phase shift (dlt) 1115.

A convergence value of this phase shift (dlt) 1115 is increased and decreased by a proportional gain of the phase lead compensator 1116. The proportional gain is set using a reciprocal of the direct-axis reactance (Xd) of the synchronous machine as a reference. As the proportional gain increases, the convergence value decreases, and as a result, a short-circuit ratio of the synchronous machine is equivalently increased. However, an upper limit of the proportional gain is limited by hunting of the control system. In reality, the drift of the phase shift (dlt) cannot be suppressed to zero.

As described above, it can be seen that the waveforms of the generator voltage phase (th_v) and the frequency converter voltage phase (th_c) in Fig. 12 shift in parallel. Based on this fact, in the embodiment of the present invention, the generator voltage signals (Vg_a, Vg_b, Vg_c) from the voltage transformer 118 are input to the coordinate converter (abc/dq) 1102, but it is obvious that the voltage signal of the frequency converter may be input to the coordinate converter (abc/dq) 1102 as another embodiment. This embodiment has an effect of reducing external connections by inputting the voltage of the frequency converter itself. This method is suitable when using a multi-level converter with less higher harmonics of the output voltage. On the contrary, when using a two-level or three-level converter with relatively larger high harmonics of the output voltage as the frequency converter, the dq-axis voltage command to the frequency converter may be used instead of the two-phase voltage phase (dt_Vg) output from the phase calculator (NRM) 1103. This embodiment has an effect of stabilizing control even in the case of a frequency converter containing many higher harmonics.

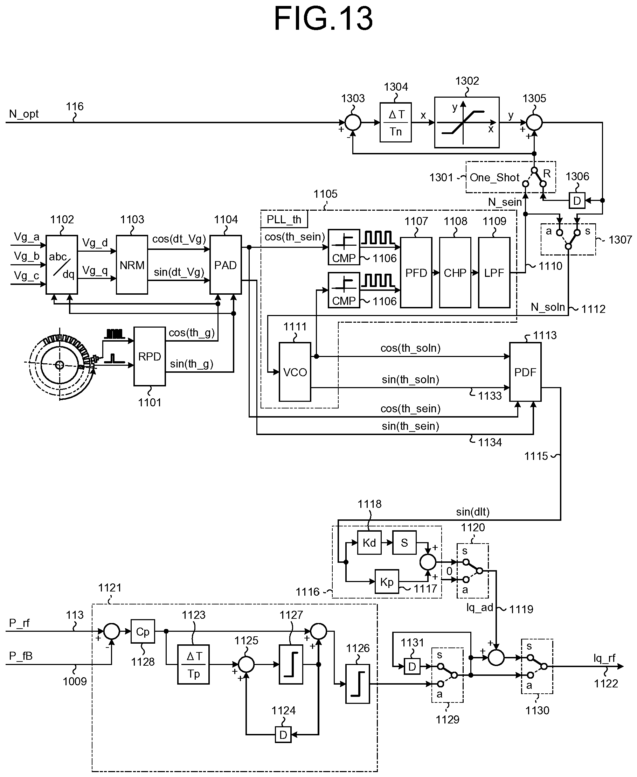

The configuration of the second embodiment of the present invention will be described with reference to Fig. 13. Former Figs 1, 10, and 11 have the same contents, and the description thereof is omitted to avoid duplication.

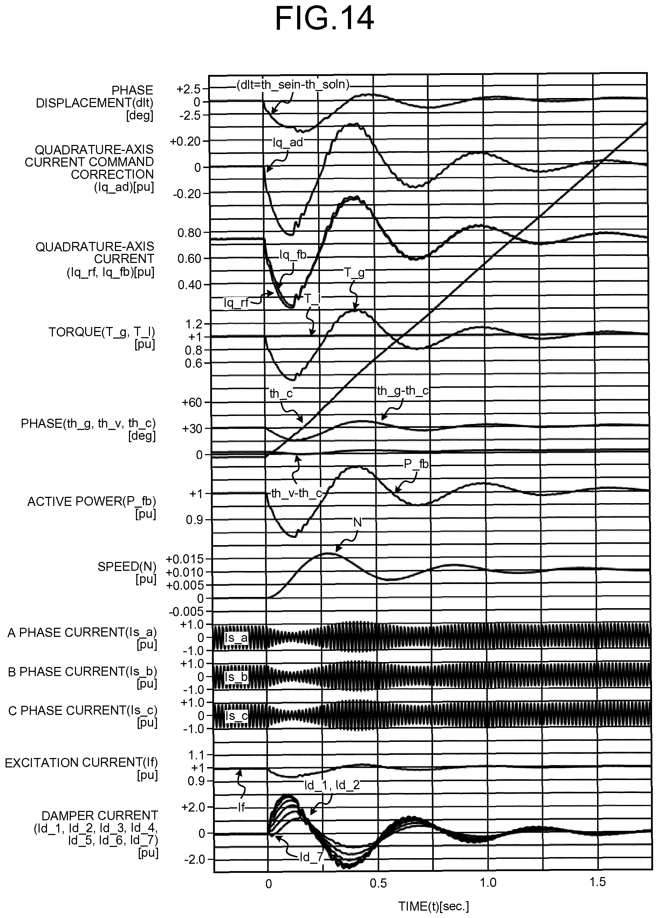

The speed adjustment during synchronous operation is realized by matching the voltage target frequency (N_soln) 1112 with the optimum speed command (N_opt) 116 obtained by branching the output of the second water turbine characteristic function generator (FN_WT) 1011. However, a sudden change in the voltage target frequency (N_soln) 1112 poses a risk of stepping out of the synchronous machine as well as overheating of the damper bar as will be described later with reference to Fig. 14. For this reason, it is necessary to suppress sudden changes in the voltage target frequency (N_soln) 1112 with the following configuration.

The one-shot input switch 1301 selectively outputs the R-side in normal. The one-shot input switch 1301 selectively outputs the one shot side only for one calculation cycle for switching from the variable speed mode to the synchronous machine mode.

A calculation operation when the one-shot input switch 1301 selectively outputs the R-side will be described below.

The limiter 1302 outputs the same value as the input x when the absolute value of the input x is less than or equal to the set value, and limits the output to a constant value with the same sign as the input x when the absolute value of the

EP 4 468 589 A1

input x exceeds the set value.

When the limiter 1302 outputs the same signal as the input, the adder 1305 and the previous value holder (D) 1306 output an integration result of the output of the limiter 1302 to the s-side of the switch 1307 via the R-side of the one-shot input switch 1301.

With the calculation period set to ΔT, the previous value holder (D) 1306 outputs to the s-side of the switch 1307 a signal simulating a first-order delay of the time constant (Tn) with an optimum speed command (N_opt) as an input, by means of the proportional gain (ΔT/Tn) 1304 and the subtractor 1303.

In the case of the variable speed mode, the switch 1307 selectively outputs a-side, so the voltage target frequency (N_soln) 1112 is not affected.

When switching from the variable speed mode to the synchronous machine mode, the one-shot input switcher 1301 selectively outputs the One_shot side and outputs the voltage detection frequency (N_sein) 1110.

The output change to the s-side of the switch 1307 is limited within the range of the upper and lower limits of the positive and negative limits of the limiter 1302 around the voltage detection frequency (N_sein), and is output as the voltage target frequency (N_soln) 1112.

When there is a large deviation at the time of switching between the optimum speed command (N_opt) 116 and the voltage detection frequency (N_sein) 1110, or when the optimum speed command (N_opt) 116 changes suddenly, the output of the limiter 1302, which is an input to the digital integrator, is limited, and the output change to the s-side of the switcher 1307 is limited.

Fig. 14 shows operation waveforms when the above limitation on output change is removed for simplicity and the voltage target frequency (N_soln) 1112 is stepped up by 0.01 [pu] . The operating conditions and control configuration before the step change are the same as in Fig. 12 above. The same numbers as those in Fig. 12 above have the same contents, and the description is omitted to avoid duplication.

At time t=0, the voltage target frequency (N_soln) 1112 is stepped up by 0.01 [pu]. The rotation phase (th_g), the generator voltage phase (th_v), and the converter voltage phase (th_c) indicate phases observed from the inertia frame before the step change. It is noted that the inertia frame before the change rotates at the voltage detection frequency (N_sein) when viewed from the stationary system.

The abovementioned phase is linear after the step change and out from the inertia frame (Inertia frame) before the step change, but the phase difference among the rotation phase (th_g), generator voltage phase (th_v), and transducer voltage phase (th_c) is kept.

When observed from a coordinate system that rotates at the voltage target frequency (N_soln) instead of the voltage detection frequency (N_sein), the above phase change appears to operate in an inertial system.

The above phase change can be regarded as the operation of a quasi-inertia frame (Qasi-inertia frame) rotating at the voltage target frequency (N_soln).

From the point of view of the control of the frequency converter 201, the torsion spring effect of the synchronous machine (SG) 101 remains the same as long as synchronization is maintained on the rotating coordinates in both the inertia frame and the quasi-inertia frame.

As described above, according to the embodiment of Fig. 13, by adjusting the voltage target frequency (N_soln) 1112, variable speed operation can be performed while maintaining the torsion spring effect of the synchronous machine 101.

In the case of Fig. 14, a settling time of the speed (N) is about 1.5 [seconds] which corresponds to 150 [seconds] when converted into a step width of 1 [pu] of the voltage target frequency (N_soln) 1112. When evaluating the change rate of the output command (P_rf) 113 of a water power plant or a wind power plant, the performance is expressed in terms of time converted into a step width of 1 [pu], it is often from 50 [seconds] or less to about 120 seconds. Thus, the numerical example of speed step change shown in Fig. 14 is not so fast as compared with ordinary plant operation.

As seen from the phase displacement (dlt) in Fig. 14, an amplitude is only about 6 [degrees]. In the operating state before the step, the amplitude of 60 [degrees] is left until the step-out limit, and there is sufficient control margin.

However, the damper bar current waveform reaches 3 [pu] at a head (Id_1) in the rotational direction. If this continues for 150 [seconds], there is a high risk that the damper bar is overheated and melted.

As shown in Fig. 14, a damper bar current varies depending on the installation location on the rotor. The current concentrates at a leading edge of the bar in the rotating direction during the power generation operation, and at a trailing edge of the bar in the rotating direction during the electric motor drive operation.

When the synchronous machine (SG) 101 is driven by a pump-turbine as generate power, a direction of rotation is reversed between the power generation operation and the pump drive operation. As a result, an electric current is biased from a center of the rotor pole core to the damper bar in one direction, thus increasing the risk of deterioration due to overheating around the damper bar.

In order to avoid the above dangers, it is necessary to suppress the time rate of change of the voltage target frequency (N_soln). For this purpose, the change rate suppression circuit disclosed in Fig. 13 is effective.

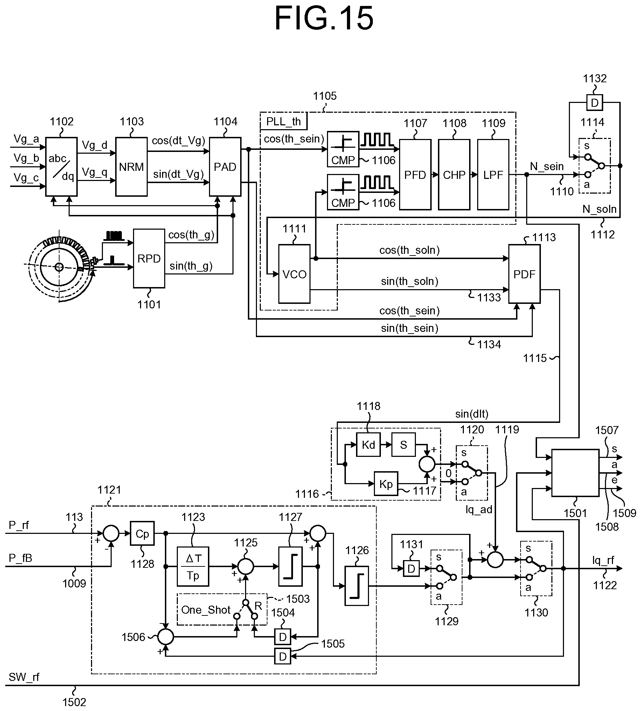

The configuration of the third embodiment of the present invention will be described with reference to Fig. 15. The same numbers as those in Figs. 1, 10 and 11 have the same contents, and the description thereof is omitted to avoid duplication.

The operation mode selector 1501 outputs three signals which are a synchronous machine mode selection (s) 1507, a variable speed mode selection (a) 1508, and an emergency stop command (e) 1509. The operation mode selector 1501 outputs any one of the three signals as a level 1 and the other two signals as level 0.

When the synchronous machine mode selection (s) 1507 or the variable speed mode selection (a) 1508 has a level 1, the switches 1114, 1120, 1129, 1130 and the one-shot input switch 1503, which will be described later, select an input from s terminal or a terminal, respectively, and output.

When the emergency stop command (e) 1509 has a level 1, the guide vane opening command (GV_rf) 110 is narrowed down to 0, the frequency converter (FC) 201 is stopped, and the synchronous circuit breaker (CB) 102 is opened.

The operation mode selector 1501 receives an external operation mode command (SW_rf) 1502 in addition to the voltage detection frequency (N_sein) 1110 and the quadrature-axis current command (Iq_rf) 1122. The operation mode command (SW_rf) 1502 has a level 1 in the synchronous machine mode and a level 0 in the variable speed mode.

The one-shot input switch 1503 selectively outputs the R-side in normal, and selectively outputs the One_shot side only for one calculation cycle in which the synchronous machine mode selection (s) 1507 switches from level 1 to level 0 and the variable speed mode selection (a) 1508 switches from level 0 to level 1.

The previous value holder (D) 1504 has the same function as the previous value holder (D) 1124 described above, and constitutes a digital integrator of the active power regulator 1121. However, an output of the previous value holder (D) 1504 is connected to an R-side of the one-shot input switch 1503.

The previous value holder (D) 1505 inputs the quadrature-axis current command (Iq_rf) 1122, matches the output with an output of the proportional gain (Cp) 1128 in the subtractor 1506, and is connected to the One_shot side of the one-shot input switcher 1503.

With the above configuration, it is possible to prevent a sudden change in the quadrature-axis current command (Iq_rf) 1122 when the operation mode selector 1501 switches from the synchronous machine mode selection (s) 1507 to the variable speed mode selection (a) 1508. This has an effect of preventing a sudden change in torque of the synchronous machine (SG) 101 at the time of switching.

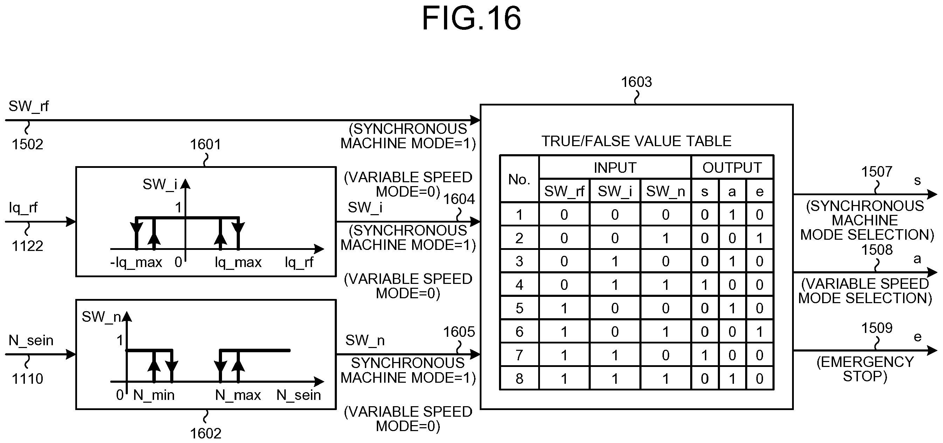

Fig. 16 is a diagram showing an embodiment of the operating mode selector 1501. The same numbers as those in Figs 11 and 15 have the same components, and the description is omitted to avoid duplication.

When the absolute value of the quadrature-axis current command (Iq_rf) 1122 is equal to or less than the set value (Iq_max), the comparator with hysteresis 1601 outputs an output of a level 1 to the true/false value table 1603. When the absolute value of the quadrature-axis current command (Iq_rf) 1122 exceeds the set value (Iq_max), the comparator with hysteresis 1601 outputs an output of a level 0 to the true/false value table 1603.

The comparator with hysteresis 1602 outputs the comparator output (SW_n) 1605 having a level 1 to the true/false value table 1603 when the voltage detection frequency (N_sein) 1110 is within the set range between the minimum set value (N_min) and the maximum set value (N_max), and outputs the comparator output (SW_n) 1605 having a level 0 to the true/false value table 1603 when the voltage detection frequency (N_sein) 1110 exceeds the set range.

A true/false value table 1603 inputs three signals of an operation mode command (SW_rf) 1502, a comparator output (SW_i) 1604, and a comparator output (SW_n) 1605, and outputs three signals of a synchronous machine mode selection (s) 1507, a variable speed mode selection (a) 1508, and an emergency stop command (e) 1509.

The true/false value table 1603 outputs the three signals described above according to row numbers 1 to 8 of the table by combining three two-level signals.

As shown in row numbers 1 and 3, when the operation mode command (SW_rf) 1502 is the variable speed mode (level 0), the voltage detection frequency (N_sein) 1110 is within the setting range and the comparator output (SW_n) 1605 is at level 0, the variable speed mode selection (a) 1508 having a level 1 is output in accordance with the operation mode command.

As shown in row numbers 7 and 8, when the operation mode command (SW_rf) 1502 is the synchronous machine mode (level 1), when the absolute value of the quadrature-axis current command (Iq_rf) 1122 is equal to or less than the set value (Iq_max) and the comparator output (SW_i) 1604 is at level 1, the synchronous machine mode selection (s) 1507 having a level 1 is output in accordance with the operation mode command.

As shown in row number 4, when the absolute value of the quadrature-axis current command (Iq_rf) 1122 is equal to or less than the set value (Iq_max) and the comparator output (SW_i) 1604 is at level 1, and when the voltage detection frequency (N_sein) 1110 is outside the setting range and the comparator output (SW_n) 1605 is at level 1, the synchronous machine mode selection (s) 1507 having a level 1 is output, even if the operation mode command (SW_rf) 1502 is the variable speed mode (level 0).

According to the embodiment of the present invention, there is an effect of preventing deviation of the rotational speed of the synchronous machine (SG) 101 from the set range.

As shown in row number 5, when the absolute value of the quadrature-axis current command (Iq_rf) 1122 exceeds the set value (Iq_max) and the comparator output (SW_i) 1604 is level 0, and when the voltage detection frequency (N_sein) 1110 is within the set range and the comparator output (SW_n) 1605 is level 0, the variable speed mode selection (a) 1508 having a level 1 is output at level 1, even if the operation mode command (SW_rf) 1502 is the synchronous machine mode (level 1).

According to the embodiment of the present invention, there is an effect of suppressing overcurrent in the synchronous machine (SG) 101 and preventing step-out in the synchronous machine mode.

As shown in rows 2 and 6, when the absolute value of the quadrature-axis current command (Iq_rf) 1122 exceeds the set value (Iq_max) and the comparator output (SW_i) 1604 is at level 0, and when the voltage detection frequency (N_sein) 1110 is outside the set range and the comparator output (SW_n) 1605 is at level 1, an emergency stop command (e) 1509 having a level 1 is output regardless of the output level of the operation mode command (SW_rf) 1502.

According to the embodiment of the present invention, an out-of-control state of the synchronous machine (SG) 101 due to the frequency converter (FC) 201 is detected at high speed and the stop operation procedure is started, so there is an effect of ensuring reliability and safety.

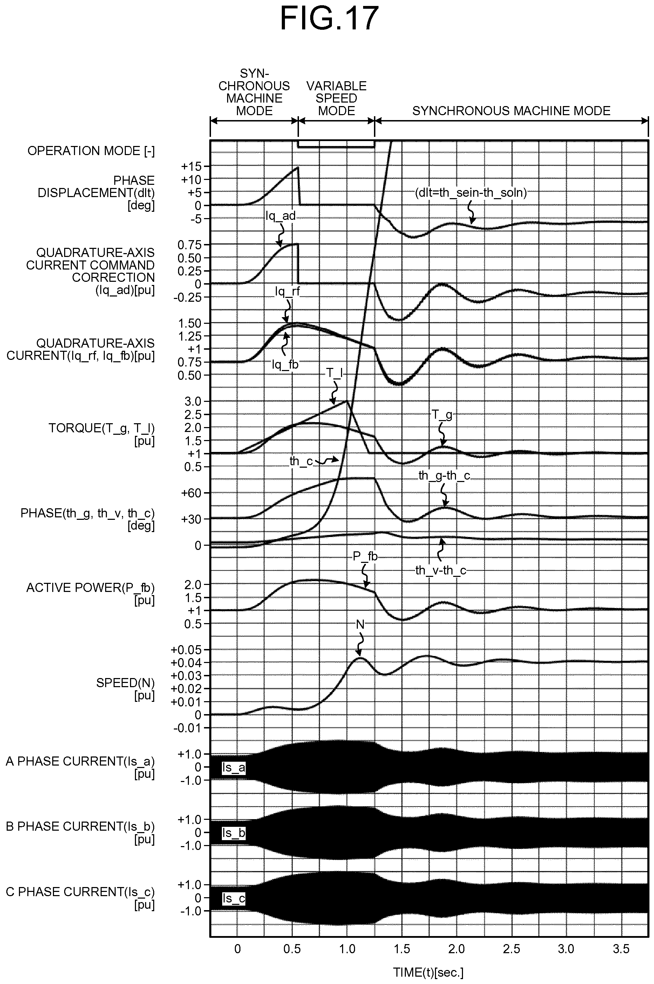

Fig. 17 shows operation waveforms of the third embodiment of the present invention. Fig. 17 have the same contents as those of Figs. 11, 12, and 15, and the description thereof is omitted to avoid duplication.

The torque (T_l) of the water turbine (WT) 104 increases rapidly during the synchronous machine operation. An absolute value of the quadrature-axis current command (Iq_rf) 1122 exceeds the set value (Iq_max), the synchronous machine mode is switched to the variable speed mode. An operating waveform is shown when the torque (T_l) rapidly decreases and the synchronous machine mode is restored.

The torque of the hydraulic turbine (T_l) increases linearly from time 0 [seconds] to time 1.0 [seconds], decreases linearly until time 1.2 [seconds], and returns to a value at time of 0 [seconds].

The phase displacement (dlt) 1115 increases positively with increasing water turbine torque (T_l), and the quadrature-axis current command correction (Iq_ad) 1119 also increases positively. As a result, the quadrature-axis current command (Iq_rf) 1122 also increases and exceeds the set value (Iq_max) at time 0.555[seconds] set to 1.5 [pu] in Fig. 17. And then, the variable speed mode selection (a) is set to a level 1, and the mode is changed to the variable speed mode.

When the switch 1120 switches to the variable speed mode, the quadrature-axis current command correction (Iq_ad) 1119 changes stepwise to 0 output.

The one-shot input switcher 1503 selectively outputs the One_shot side only for one calculation period when the variable speed mode selection (a) 1508 switches from level 0 to level 1 at time 0.555 [seconds]. Therefore, the output of the limiter 1127, which is the digital integrator output of the active power regulator 1121, does not change suddenly, and the quadrature-axis current command (Iq_rf) 1122 that is output via the a-side of the switches 1129 and 1120 also changes continuously.

The switch 1114 selects a-side and outputs when the variable speed mode is entered, and inputs the voltage detection frequency (N_sein) 1110 to the voltage control oscillator (VCO) 1111.

In the variable speed mode, the voltage target frequency (N_soln) 1112 follows the voltage detection frequency (N_sein) 1110.

The phase shift (dlt) 1115 returns the input signal that configures the phase-locked loop (PLL_th) 1105 to 0 in accordance with the dynamic characteristics of the comparator (CMP) 1106, the phase frequency detector (PFD) 1107, the charge pump (CHP) 1108, and the low-pass filter (LPF) 1109. In Fig. 7, it takes 0.0167 [seconds] to return to 0.

According to the embodiment of the present invention, the phase shift (dlt) is returned to 0 by the phase lock loop (PLL_th) 1105 each time the mode is switched to the variable speed mode, so there is an effect that a stable operation continues even if switching between the synchronous machine mode and the variable speed mode is repeated.

When the variable speed mode is entered at time 0.555 [seconds], the active power regulator 1121 decreases the quadrature-axis current command (Iq_rf) 1122 so that the active power (P_fb) 1009 is lowered to the output command (P_rf) 113, and fall below the set value (1.0 [pu]) of the comparator with hysteresis 1601 at time 1.25 [seconds], and the mode is switched back to the synchronous machine mode.

When switching to the synchronous machine mode, the voltage target frequency (N_soln) 1112 is held at the voltage detection frequency (N_sein) 1110 at the time of switching.

The voltage detection frequency (N_sein) 1110 has an effect of suppressing vibration inside the frequency converter (FC) 201 and ensuring stability by providing a phase delay with respect to the speed signal (N_fB) 108.

A deviation between the voltage detection frequency (N_sein) 1110 and the speed signal (N_fB) 108 is caused by a phase delay, but correction can be made by using the second embodiment of the present invention together.

When the mode is switched to the synchronous machine mode again at time 1.25 [seconds], the phase shift (dlt) 1115 starts to change from 0, the quadrature-axis current command correction (Iq_ad) 1119 also changes, the speed (N) is settled to the voltage target frequency (N_soln) 1112 by the quadrature-axis current command (Iq_rf) 1122, and the phase difference between the rotation phase (th_g) of the synchronous machine and the voltage phase (th_c) of the frequency converter (th_g-th_c) is also settled.

Since a set value of this phase difference (th_g-th_c) is determined by the torque of the synchronous machine, it is almost the same as before the step change at time 0, but the voltage phase (th_c) of the frequency converter itself is sliding.

In addition, the speed (N) is also in equilibrium with a value higher by 0.04 [pu] than before the step change.

As a result, according to the embodiment of the present invention, it can be interpreted that the synchronous machine (SG) 101 controlled by the frequency converter 201 transitions from the rotational phase reference (N_sein system) that is the inertia frame (inertia frame) before the step change to a new rotational phase reference (N_sein system) that changes the rotational speed. When the synchronous machine (SG) 101 is controlled in a synchronous machine mode of the frequency converter 201, it can be considered that the target frequency reference (N_soln system) is controlled by a synchronizing force with a quasi-inertia frame.

In the embodiment of the present invention shown in Figs. 15 and 16, the rotational speed at the time of settling is deviated from before the step change, but by using the configuration of the second embodiment together, it can be returned to the same value before the step change.

In the embodiment of the present invention shown in Figs. 15 and 16, the quadrature-axis current command (Iq_rf) 1122 is used as an input of a comparator with hysteresis 1601, and the voltage detection frequency (N_sein) 1110 is used as an input of the comparator with hysteresis 1602.

As explained in the previous paragraph [0028], there is a relationship of "voltage=proportionality factor × rotational speed". From this, it is obvious that the generator voltage command (V_rf) 122 or the generator voltage (Vg) 117 may be used instead of the voltage detection frequency (N_sein) 1110.

Similarly, as explained in the previous paragraph [0028], there is a relationship of "torque=proportionality factor × current". From this, it is obvious that the output command (P_rf) 113 or active power (P_fb) 1009 may be used instead of the quadrature-axis current command (Iq_rf) 1122.

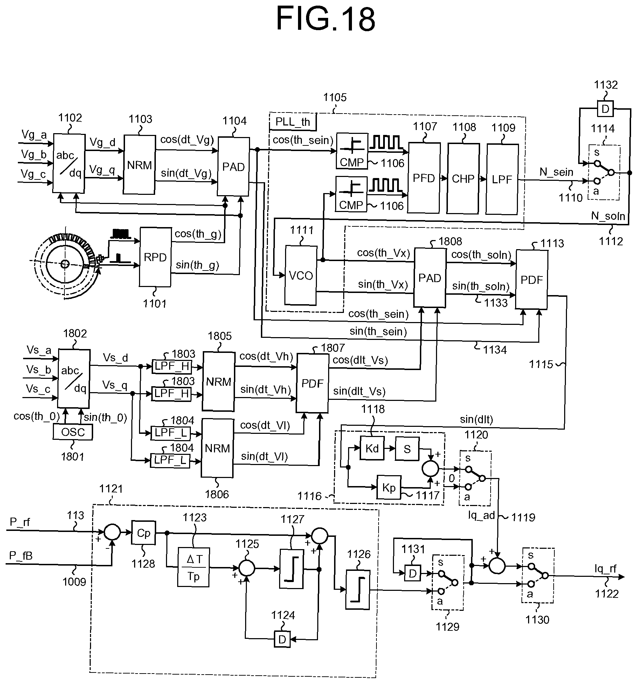

The configuration of the fourth embodiment of the present invention will be described using Fig. 18.

An oscillator (OSC) 1801 outputs two-phase signals [cos (th_0), sin (th_0)] of the reference frequency of the AC system (PS) 103.

A coordinate converter (abc/dq) 1802 inputs the AC system voltage signals (Vs_a, Vs_b, Vs_c) 1003 from the voltage transformer 128 and the two-phase signals [cos(th_0), sin(th_0)] and converts them into dq-axis AC voltage signals (Vs_d, Vs_q).

The coordinate converter (abc/dq) 1802 performs a calculation of Mathematical formula (10).

(Mathematical formula 10)

$$\begin{bmatrix} Vs\_d \\ Vs\_q \end{bmatrix} = \frac{2}{3} \begin{bmatrix} + \cos(\text{th\_0}) + \cos\left(\text{th\_0} - \frac{2}{3}\pi\right) + \cos\left(\text{th\_0} + \frac{2}{3}\pi\right) \\ - \sin(\text{th\_0}) - \sin\left(\text{th\_0} - \frac{2}{3}\pi\right) - \sin\left(\text{th\_0} + \frac{2}{3}\pi\right) \end{bmatrix} \begin{bmatrix} Vs\_a \\ Vs\_b \\ Vs\_c \end{bmatrix}$$

$$\cdots (10)$$

The dq-axis AC voltage signals (Vs_d, Vs_q) have waveforms close to zero-frequency DC signals in a steady state.

The dq-axis AC voltage signals (Vs_d, Vs_q) are input to the first low-pass filter (LPF_H) 1803 and the second low-pass filter (LPF_L) 1804, and the respective outputs are output to the phase calculators (NRM) 1805 and 1806.

The cut-off frequency of the first low-pass filter (LPF_H) 1803 is set higher than the cut-off frequency of the second low-pass filter (LPF_L) 1804.

The cut-off frequency of the first low-pass filter (LPF_H) 1803 is a frequency that is necessary for calculating a positive sequence phase component of the AC system voltage signal. When the first low-pass filter (LPF_H) 1803 is realized by a moving average, the moving average interval length is set to a half cycle or one cycle of a reference frequency of the AC system (PS) 103.

The cut-off frequency of the second low-pass filter (LPF_L) 1804 is a frequency that is necessary for extracting and calculating a positive phase fluctuation of the AC system voltage signal, and is set according to the total momentum of inertia (I_g) of the synchronous machine and the turbine. When the second low-pass filter (LPF_L) 1804 is implemented by a moving average, the moving average section length is set between 0.1 [seconds] and 1.0 [seconds] as a guideline.

A phase calculator (NRM) 1805 and a phase calculator (NRM) 1806 compute and output two-phase voltage phases (dt_Vh) and (dt_Vl), respectively whose amplitudes are normalized in the same manner as the previous phase calculator (NRM) 1103.

A phase subtractor (PDF) 1807 outputs a phase difference (dlt_Vs) between the AC voltage phase (dt_Vh) and the AC voltage phase (dt_Vl). A phase subtractor (PDF) 1807 performs the operation of Mathematical formula (11).

(Mathematical formula 11)

$$(dlt\_Vs) = (dl\_Vh) - (dl\_Vl) \quad \cdots (11)$$

With the above configuration, the phase difference (dlt_Vs) corresponds to the voltage phase fluctuation of the AC system.

A phase adder (PAD) 1808 receives the two-phase signal [cos (th_Vx), sin (th_Vx)] from the voltage controlled oscillator (VCO) 1111 and the two-phase signal [cos (dlt_Vs), sin (dlt_Vs)] from the phase subtractor (PDF) 1807, and performs the phase calculation of Mathematical formula (12).
(Mathematical formula 12)

$$(th\_soln) = (th\_Vx) + Cv \times (dlt\_Vs) \quad \cdots (12)$$

The coefficient (Cv) of Mathematical formula (12) is set larger as the impedance of the reactor element provided between the frequency converter (FC) 201 and the synchronous machine (SG) 101 is larger and as the direct-axis reactance (Xd) of the synchronous machine (SG) 101 is larger. In the embodiment of the present invention, the sign of the coefficient (Cv) is negative and its absolute value ranges from 1.0 to 2.0.

With the above configuration, by biasing the voltage phase variation (dlt_Vs) of the AC system (PS) 103 to output the phase shift (dlt) 1115 and adjusting the quadrature-axis current command (Iq_rf) 1122 via the quadrature-axis current command correction (Iq_ad) 1119, the synchronous machine (SG) 101 directly connected to the AC system (PS) 103 simulates the operation as shown FIG. 6 when the voltage phase of the AC system (PS) 103 fluctuates, with an effect of making use of the synchronizing power. In addition, by intentionally setting the coefficient (CV) large or small, there is an effect of adjusting the inertia effect of the synchronous machine (SG) 101 seen from the AC system (PS) 103.

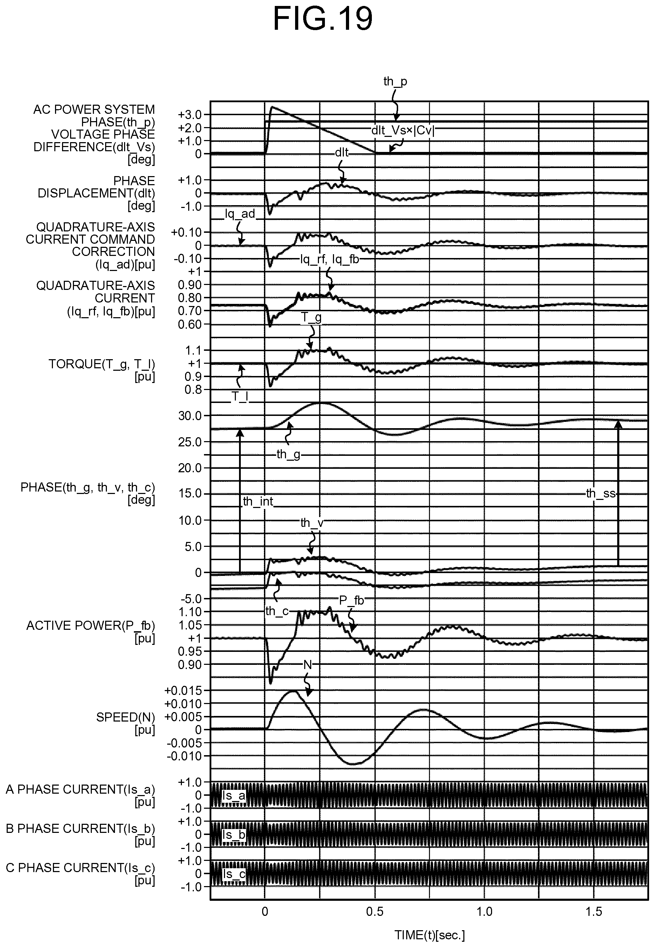

Fig. 19 shows operation waveforms of the fourth embodiment of the present invention. The same numbers as those in the previous Figs. 10, 11 and 12 have the same components, and the description thereof is omitted to avoid duplication.

Fig. 19 shows a transient response when the voltage phase (th_p) of the AC system at time 0 advances stepwise (2.5 [degrees]). A state before the step change is the same as the state in the previous Fig. 12, and the description is omitted to avoid duplication.

Fig. 19 shows a case where moving average calculators are employed as the first low-pass filter (LPF_H) 1803 and the second low-pass filter (LPF_L) 1804. The moving average period of the first low-pass filter (LPF_H) 1803 is set to 1 cycle of the AC system reference frequency, and the moving average period of the first low-pass filter (LPF_H) 1803 is set to 0.5 [seconds].

Fig. 19 shows a case where the coefficient (Cv) of Mathematical formula (12) is set to -1.5 [pu].

When the voltage phase (th_p) of the AC system at time 0 advances in steps of 2.5 [degrees], the voltage phase fluctuation (dlt_Vs) rises and falls linearly with a triangular wave and returns to the original phase at time 0.5 [seconds].

The phase shift (dlt) 1115 that is biased by the voltage phase fluctuation (dlt_Vs) changes in the opposite direction because the sign of the coefficient (Cv) is negative, and both the quadrature-axis current command correction (Iq_ad) 1119 and the quadrature-axis current command (Iq_rf) 1122 change in a direction opposite to the voltage phase fluctuation (dlt_Vs).

This results in a torque (T_g) response similar to that of Fig. 6. The rotational speed (N) converges to a speed before the step change as the vibration is damped by the same effect as the damper bar current.

Since the characteristics of the synchronous machine (SG) 101 are the same as in Fig. 6, a phase difference between the rotation phase (th_g) and the generator voltage phase (th_v) both before the step change (th_int) and after settling (th_ss) has the same value as those in Fig. 6.

On the other hand, the generator voltage phase (th_v) before and after the step response shifts together with the frequency converter voltage phase (th_c).

However, the phase difference between the rotation phase (th_g), the generator voltage phase (th_v) and the converter voltage phase (th_c) is preserved. The above phase fluctuation can be regarded as an operation of a quasi-inertia frame (Qasi-inertia frame) rotating at the voltage target frequency (N_soln).

In the above examples, examples were shown in which the second, the third, and the fourth embodiments were implemented independently. However, it is possible to arbitrarily combine the above three embodiments.

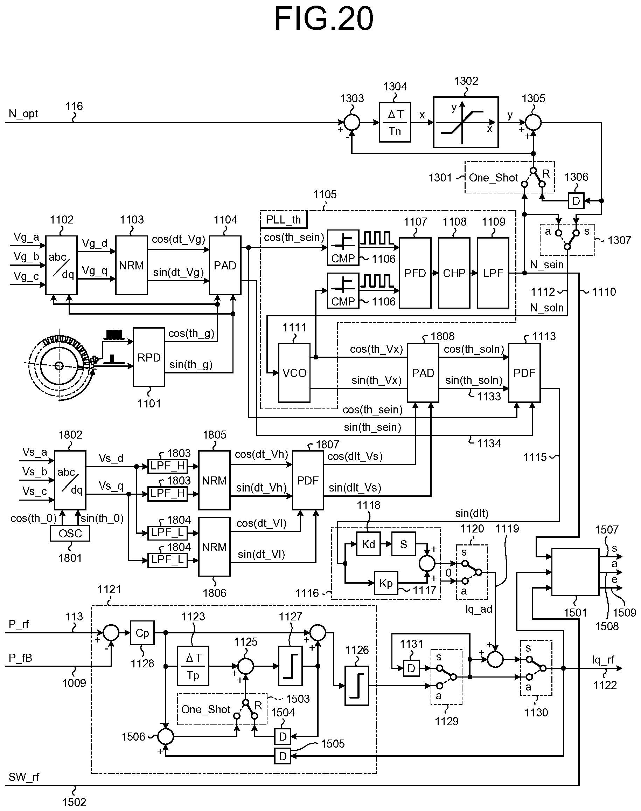

Fig. 20 shows an example in which the second, the third, and the fourth embodiments are implemented simultaneously. Figs. 11, 13, 15, 16 and 18 have the same numbers as those in the previous Figs. 11, 13, 15, 16 and 18, and the description thereof is omitted to avoid duplication.

Reference Signs List

101 synchronous machine (SG)

102 synchronous circuit breaker (CB)

103 AC power system (PS)

104 water turbine (WT)

105 governor (GOV)

106 speed regulator (ASR)

107 rotational speed detector (SS)

108 speed signal (N_fB)

109 speed command (N_rf)

110 guide vane opening command (GV_rf)

111 guide vane opening signal (GV_fB)

112 water turbine characteristic function generator (FN_GV)

113 output command (P_rf)

114 guide vane optimum opening (GV_opt)

115 arbitration rate (DR)

116 optimum speed command (N_opt)

117 generator voltage (Vg)

118,119 instrument transformer

119 voltage sensor (V_sen)

120 generator voltage signal (Vg_fB)

121 automatic voltage regulator (AVR)

122 generator voltage command (Vg_rf)

123 field excitation voltage command (Vf_rf)

124 field excitation device (EXC)

125 field excitation winding current (If)

126 synchronous input command (Syn_rf)

127 synchronous tester (Syn)

129 system voltage (Vs)

130 synchronous input command (CB_rf)

201 frequency converter (FC)

202 load switch (LS)

1001,1002,1003 measurement line

1004,1005 command line

1006 instrument current transformer

1007 generator current (Ig)

1008 power sensor (P_sen)

1009 active power (P_fb)

1010 static head signal (H_st)

1011 second hydraulic turbine characteristic function generator (FN_WT)

1101 rotational phase detector (RPD)

1102, 1802 coordinate converter (abc/dq)

1103, 1805, 1806 phase calculator (NRM)

1104, 1808 phase adder (PAD)

1105 phase-locked loop (PLL_th)

1106 comparator (CMP)

1107 phase frequency detector (PFD)

1108 charge pump (CHP)

1109 low-pass filter (LPF)

1110 voltage detection frequency (N_sein)

1111 voltage control oscillator (VCO)

1112 voltage target frequency (N_soln)

1113, 1807 phase subtractor (PDF)

1114, 1120, 1129, 1130, 1307 switch

1115 phase shift (dlt)

1116 phase lead compensator

1117 proportional gain (Kp)

1118 differential gain (Kd)

1119 quadrature-axis current command correction (Iq_ad)

1121 active power regulator
1122 quadrature-axis current command (Iq_rf)
1123 proportional gain (ΔT/Tp)
1124, 1131, 1132, 1306, 1504, 1505 previous value holder (D)
1125, 1305 adder
1126, 1127, 1302 limiter
1128 proportional gain (Cp)
1133 voltage target phase signal (th_soln)
1134 voltage phase signal (th_sein)
1301, 1503 one-shot input switch
1304 proportional gain (ΔT/Tn)
1303, 1506 subtractor
1501 operation mode selector
1507 synchronous machine mode selection (s)
1508 variable speed mode selection (a)
1509 emergency stop command (e)
1502 operation mode command (SW_rf)
1601, 1602 Comparator with hysteresis
1603 True/false value table
1604 comparator output (SW_i)
1605 comparator output (SW_n)
1801 oscillator (OSC)
1803 first low-pass filter (LPF_H)
1804 second low-pass filter (LPF_L)

**Claims**

1. A variable-speed synchronous generator-motor device comprising:

   a synchronous machine;
   a frequency converter including a semiconductor power converter connected to armature winding of the synchronous machine;
   a current controller configured to:

      coordinate-convert an armature current of the synchronous machine into a direct-axis current and a quadrature-axis current based on a rotational phase reference (N_sein system);
      compare the direct-axis current with a direct-axis current command;
      compare the quadrature-axis current with a quadrature-axis current command; and
      control a synchronous machine side voltage of the frequency converter; and

   a variable speed mode regulator configured to compare a command value of active power or a rotational speed of the synchronous machine with a measurement value to output a result to the current controller as a first quadrature-axis current command value, wherein
   the variable-speed synchronous generator-motor device further comprises:

      a first switcher configured to switch an output between an update output and previous value holding of the first quadrature-axis current command value;
      a phase detector configured to measure a voltage phase (th_sein) of the synchronous machine;
      a phase calculator configured to calculate and output a target voltage phase (th_soln) of the synchronous machine based on a target frequency reference (N_soln system) of the synchronous machine;
      a phase lead compensator configured to input a result of comparing the voltage phase (th_sein) with the target voltage phase (th_soln) as a phase shift (dlt);
      a synchronous machine mode regulator configured to output an output of the phase lead compensator as a second quadrature-axis current command; and
      a second switcher configured to switch an output between the second quadrature-axis current command and a zero output to bias the output to the first quadrature-axis current command value, and
      the first switcher switches from the update output to the previous value holding, and the second switcher simultaneously switches from the zero output to the second quadrature-axis current command.

2. The variable-speed synchronous generator-motor device according to claim 1, further comprising a frequency change suppressor configured to suppress a change rate of the target frequency reference (N_soln system).

3. The variable-speed synchronous generator-motor device according to claim 1, wherein

when a quadrature-axis current value to the current controller exceeds a set range,
the first switcher switches from the previous value holding to the update output, and the second switcher simultaneously switches from the second quadrature-axis current command to the zero output, and
when the rotational speed of the synchronous machine exceeds a set range,
the first switcher switches from the update output to the previous value holding, and the second switcher simultaneously switches from the zero output to the second quadrature-axis current command.

4. The variable-speed synchronous generator-motor device according to claim 1, further comprising a power supply voltage detector configured to detect a voltage phase fluctuation of an AC power supply terminal of the frequency converter, wherein the power supply voltage phase fluctuation is biased to the phase shift (dlt).

# FIG.1

EP 4 468 589 A1

# FIG.2

# FIG.3

# FIG.4

# FIG.5

# FIG.6

TORQUE(T_g, T_l) [pu]

PHASE(th_g, th_v) [deg]

ACTIVE POWER(P_fb) [pu]

SPEED(N) [pu]

A PHASE CURRENT(Is_a) [pu]

B PHASE CURRENT(Is_b) [pu]

C PHASE CURRENT(Is_c) [pu]

EXCITATION CURRENT(If) [pu]

DAMPER CURRENT (Id_1, Id_2, Id_3, Id_4, Id_5, Id_6, Id_7) [pu]

TIME(t)[sec.]

# FIG.7

# FIG.8

# FIG.9

FIG.10

# FIG.11

# FIG.12

# FIG.13

# FIG.14

# FIG.15

# FIG.16

TRUE/FALSE VALUE TABLE — 1603

| No. | INPUT | | | OUTPUT | | |
|-----|-------|------|------|---|---|---|
| | SW_rf | SW_i | SW_n | s | a | e |
| 1 | 0 | 0 | 0 | 0 | 1 | 0 |
| 2 | 0 | 0 | 1 | 0 | 0 | 1 |
| 3 | 0 | 1 | 0 | 0 | 1 | 0 |
| 4 | 0 | 1 | 1 | 1 | 0 | 0 |
| 5 | 1 | 0 | 0 | 0 | 1 | 0 |
| 6 | 1 | 0 | 1 | 0 | 0 | 1 |
| 7 | 1 | 1 | 0 | 1 | 0 | 0 |
| 8 | 1 | 1 | 1 | 0 | 1 | 0 |

EP 4 468 589 A1

# FIG.17

EP 4 468 589 A1

# FIG.18

# FIG.19

# FIG.20

**EP 4 468 589 A1**

<table>
<tr><td colspan="2">INTERNATIONAL SEARCH REPORT</td><td colspan="2">International application No.<br><br>**PCT/JP2022/002067**</td></tr>
</table>

| A. | CLASSIFICATION OF SUBJECT MATTER |
|---|---|

*H02P 6/28*(2016.01)i; *H02P 25/022*(2016.01)i
FI:   H02P6/28; H02P25/022

According to International Patent Classification (IPC) or to both national classification and IPC

| B. | FIELDS SEARCHED |
|---|---|

Minimum documentation searched (classification system followed by classification symbols)

H02P6/28; H02P25/022

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2021-145436 A (HITACHI LTD) 24 September 2021 (2021-09-24)<br>paragraphs [0001]-[0071], fig. 1-11B | 1-4 |
| A | WO 2021/182460 A1 (HITACHI LTD) 16 September 2021 (2021-09-16)<br>paragraphs [0001]-[0071], fig. 1-11B | 1-4 |
| A | WO 2019/235595 A1 (HITACHI MITSUBISHI HYDRO CORPORATION) 12 December 2019 (2019-12-12)<br>paragraphs [0001]-[0206], fig. 1-21B | 1-4 |
| A | JP 2000-152698 A (TOSHIBA CORP) 30 May 2000 (2000-05-30)<br>paragraphs [0001]-[0030], fig. 1-8 | 1-4 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 March 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| | | | |
|---|---|---|---|
| International application No. | | | |
| **PCT/JP2022/002067** | | | |

| Patent document cited in search report | Publication date (day/month/year) | Patent family member(s) | Publication date (day/month/year) |
|---|---|---|---|
| JP 2021-145436 A | 24 September 2021 | (Family: none) | |
| WO 2021/182460 A1 | 16 September 2021 | (Family: none) | |
| WO 2019/235595 A1 | 12 December 2019 | EP 3806318 A1 paragraphs [0001]-[0215], fig. 1-21B CN 112236934 A | |
| JP 2000-152698 A | 30 May 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019235595 A1

- JP 5537095 B

**Non-patent literature cited in the description**

- Virtual Synchronous Generator Control of Inverters for Inertia in Responding to Inertia Deficiency in Power Systems. *Journal of the Institute of Electrical Engineers of Japan*, November 2021, vol. 141 (11), 698